# EUROPÄISCHE PATENTSCHRIFT

(11) **EP 1 268 253 B1**
(45) Veröffentlichungstag und Bekanntmachung des Hinweises auf die Patenterteilung: **30.08.2006**
(21) Anmeldenummer: 01921004.6
(22) Anmeldetag: 03.04.2001
(51) Int. Cl.: B62D 1/16

(54) **LAGERUNGSKASTEN FÜR DIE LAGERUNG EINER LENKWELLE**
SUPPORT CASING FOR HOUSING A STEERING SHAFT
LOGEMENT DE SUPPORT POUR UN ARBRE DE DIRECTION

(30) Priorität: 06.04.2000 AT 5812000; 21.12.2000 AT 21212000
(43) Veröffentlichungstag der Anmeldung: 02.01.2003
(60) Teilanmeldung: 06009618.7
(73) Patentinhaber: ThyssenKrupp Presta Aktiengesellschaft, 9492 Eschen (LI)
(72) Erfinder: HEIML, Roland, A-4870 Vöcklamarkt (AT)
(74) Vertreter: Secklehner, Günter
(86) Internationale Anmeldenummer: PCT/AT2001/000095
(87) Internationale Veröffentlichungsnummer: WO 2001/076930

(56) Entgegenhaltungen:
- EP-A- 0 816 204
- DE-A- 19 750 805
- US-A- 5 531 526

## Beschreibung

Die Erfindung betrifft ein mehrteiliges Mantelrohr für eine Lenkwelle, einen Lagerungskasten für die Lagerung einer Lenkwelle sowie ein Verfahren zur Montage von Lagerelementen an einem Lagerungskasten entsprechend den Merkmalen in den Oberbegriffen der Ansprüche 1, 25, 34 und 58.

In der gattungsgemäßen Druckschrift EP 0 816 204 A1 ist ein Mantelrohr beschrieben, das aus mehreren Stanz- und Biegeteilen besteht. Ein oberer Teil zum Umgeben der Lenkwelle ist in einer zu seiner Längserstreckung senkrechten Ebene etwa U-förmig gestaltet mit einem gewölbten Oberteil und zwei ebenen Seitenschenkeln. Ein untere Teil ist im wesentlichen flach ausgebildet und schließt den oberen Teil ab. Ein weiterer zur Versteifung am oberen Teil vernieteter, im wesentlichen flacher Teil, ist parallel zum unteren Teil angebracht. An den stirnseitigen Enden des Mantelgehäuses sind spanlos geformte, fugenlose Lageraufnahmestellen vorgesehen, in die Kugellager zur Lagerung der Lenkwelle eingepresst werden. Die Lageraufnahmestellen sind im Abstreckverfahren, also durch spanlose Verformung hergestellt und sind ausschließlich jeweils mit Hilfe von mittels Nietlappen erstellte Nietverbindungen mit dem Mantelgehäuse verbunden. Der obere und untere Teil sind durch gegenseitige Vernietung miteinander verbunden. Dazu ist der untere Teil seitlich mit Lappen versehen, welche in Löcher der Seitenschenkeln des oberen Teils eingreifen und verstemmt werden. Einige dieser Nietstellen können durch Punktschweißstellen ersetzt werden oder werden die Nietstellen zusätzlich durch Punktschweißung verstärkt. Nachteilig ist die hohe Komplexität des Mantelrohrs, sodaß in der Serienproduktion Schwierigkeiten auftreten können. Des weiteren sind für die Positionierung der Kugellager in den Lageraufnahmestellen Positioniermittel erforderlich, wodurch die Einstellung eines vorgesehenen Einbaumaßes oder der Ausgleich von Fertigungstoleranzen nicht möglich ist.

In der DE 692 00 117 T2 ist ein weiteres Mantelrohr beschrieben, das aus einem einstückigen Zuschnitteil gefertigt ist, der über seine Längserstreckung an den beiden gegenüberliegenden Seiten Laschen angeordnet hat, die über ein Klammersystem, oder Bördeln oder Schweißen miteinander vereinigt werden und ein zylindrisches Rohr bilden. Nachteilig dabei ist, daß ein relativ hoher Montageaufwand zu betreiben ist und daß eine automatisierte Fertigung nur unter schwierigen Bedingungen und hohen Toleranzabweichungen möglich ist.

Gemäß einem anderen veröffentlichten Dokument EP 0 926 733 A2 ist ein Mantelrohr zur Umgebung der Lenkwelle bekannt, das aus einem rohrförmigen Mantel gebildet ist, der in seiner Längserstreckung eine Ausnehmung für die längsverschiebbare Fixierung der Lenkwelle aufweist und an dessen beiden gegenüberliegenden Stirnseiten jeweils eine Lageraufnahmestelle mit eingepreßtem Lager angeordnet ist. Weiters ist das Mantelrohr in Richtung der Frontseite des Fahrzeuges auf einen größeren Durchmesser aufgeweitet. Nachteilig ist dabei, daß der zu seiner Längserstreckung senkrecht ausgebildete rohrförmige Querschnitt eine niedrigere Steifigkeit als ein mehreckiger Querschnitt besitzt. Des weiteren treten hohe Toleranzabweichungen auf und ist deshalb eine Nachbearbeitung erforderlich.

Des weiteren ist aus der US 5,531,526 A ein Lagerungskasten für die Lagerung einer Lenkwelle bekannt, bei dem in einem Mantelrohr zumindest an einem Ende ein Gehäuse für eine Rollenlagerung angeordnet ist. Die Rollenlagerung umfasst einen Außen- und Innenring sowie zwischen diesen angeordnete Wälzkörper, wobei der Außenring gegen eine vom Gehäuse ausgebildete, umlaufende Schulter abgestützt und der Innenring mit einer Vorspannkraft einer Feder beaufschlagt ist.

Schließlich ist aus der DE 197 50 805 A1 ein spanlos hergestelltes Schrägkugellager für ein Lenkungslager bekannt, welches aus einem Außenring, einem Innenring und dazwischen auf dazugehörigen Laufbahnen abwälzenden Lagerkugeln besteht. Bei diesem Schrägkugellager ist ein Auseinanderfallen des Lagers durch eine Verliersicherung verhindert. Die Verliersicherung ist durch mehrere radial nach außen gerichtete Vorsprünge des Innenringes gebildet, die den Außenring in radialer Richtung überdecken.

Der vorliegenden Erfindung liegt die Aufgabe zugrunde, mit wenigen Fertigungsschritten ein konstruktiv einfaches und unter Einhaltung engster Toleranzgrenzen ein Mantelrohr mit hoher Steifigkeit zu produzieren. Darüber hinaus soll eine hohe Lagergenauigkeit der Lenkwelle und ein Ausgleich von Fertigungstoleranzen und eine Reduzierung der Einzelbauteile erreicht werden.

Diese Aufgabe der Erfindung wird durch die Merkmale des Anspruches 1 gelöst. Der überraschende Vorteil dieser Lösung liegt darin, daß über zwei ebenflächige Zuschnitteile mehrere offene Profilquerschnitte gefertigt werden, die in einer zu deren Längserstreckung senkrecht aufnehmenden Ebene einen mehreckigen Querschnitt ausbilden und dadurch eine hohe Steifigkeit aufweisen. Der obere und untere Teil wird beispielsweise über ein Verbindungselement wie z.B. einer Schweißnaht, insbesondere einer Laser- oder Plasmaschweißnaht, miteinander verbunden, womit durch eine geringe und örtliche Wärmeentwicklung eine Vormontage von Bauteilen, Zubehör etc. bei toleranzfreier Ausgestaltung der Konstruktion möglich ist. Durch das Laserschweißen wird nun auch die Möglichkeit geschaffen, Bauteile z.B. aus Kunststoff und dgl. vorzumontieren und nachträglich erst zu verschweißen, ohne daß diese einer jeglichen Verformung während des Fügeverfahrens unterliegen.

Vorteilhaft ist auch eine Ausführung nach Anspruch 2, wodurch der Bauteil nur einer örtlichen, minimalen Wärmeeinbringung ausgesetzt und dadurch eine weitestgehend toleranzfreie Konstruktion herstellbar ist.

Möglich ist auch eine Fortbildung nach Anspruch 3, wobei ohne jegliche Wärmeeinbringung eine sichere und kostengünstige Verbindung herstellbar ist.

Eine vorteilhafte Weiterbildung wird durch Anspruch 4 erreicht, die eine durch die verstärkte Kapillarwirkung begünstigte Verbindungsherstellung ermöglicht und zudem durch den geringen Wärmeeinfluß eine genaue Herstellung zuläßt.

Vorteilhaft ist aber auch eine Ausführungsvariante nach den Ansprüchen 5 bis 7, wodurch eine Erleichterung für die Montage, insbesondere für die Verbindungsherstellung, erreicht wird und die Schweiß- und Biegevorrichtungen einfach ausgestaltet werden können.

Dabei hat sich eine Fortbildung nach Anspruch 8 als vorteilhaft erwiesen, da das Aufeinandersetzen der beiden Teile mit einer weitaus geringeren Genauigkeit zu erfolgen hat und sich dadurch die Ausbildung der Zentriereinrichtung bzw. Positioniereinrichtung wesentlich vereinfacht.

Vorteilhaft ist auch eine Weiterbildung nach Anspruch 9, welche die Anzahl der unterschiedlichen Arbeitsvorgänge, insbesondere Schweißvorgänge, reduziert.

Durch die Ausbildung gemäß den Ansprüchen 10 bis 12, wird der für die Unterbringung der Lenkwelle erforderliche Raum zur Verfügung gestellt und die Steifigkeit der Konstruktion erhöht.

Eine weitere Ausbildungsvariante ist in den Ansprüchen 13 und 14 beschrieben, wodurch ein optimales Aufeinandersetzen des oberen Teiles auf den unteren Teil gewährt ist und zu einer Beschleunigung der Montage führt.

Vorteilhaft ist aber auch eine Ausführungsvariante nach Anspruch 15, welche eine Erhöhung der Steifigkeit bewirkt.

Auch die Ausbildung nach Anspruch 16 ist von Vorteil, weil sich durch die Wahl eines geeigneten Höhenverhältnis die Steifigkeit positiv beeinflussen läßt.

Von Vorteil ist eine Weiterbildung nach den Ansprüchen 17 und 19, wodurch eine Variierung der Bedienungshöhe des Lenkrades ermöglicht wird.

Eine Ausführungsvariante nach Anspruch 18 hat den Vorteil, daß durch die Anbringung einer Verstärkungsleiste selbst bei einer dünnwandigen und daher geringen Konstruktion eine hohe Steifigkeit erreicht wird.

Vorteilhaft ist auch eine Ausführung nach Anspruch 20, wodurch sich keine weiteren Abweichungen von vorgegebenen Toleranzen ergeben, da die Temperatur während des Schweißvorganges relativ niedrig gehalten werden kann.

Vorteilhaft ist auch eine Ausbildung nach Anspruch 21, da das bei der Herstellung durch einen Kleber gebildete Verbindungselement keinen Störeinflüssen unterliegt, wie dies beispielsweise beim Schweißen durch Sauerstoffeinschlüsse etc. auftreten kann.

Die in den Ansprüchen 22 und 24 beschriebenen Ausführungsvarianten ermöglichen eine exakte Fertigung des Mantelrohres.

Durch die Ausbildung nach Anspruch 23 wird eine platzsparende und kompakte Ausbildung des Mantelrohres mit einem geringen Bauteilgewicht erreicht.

Die Aufgabe der Erfindung wird aber auch durch die im Kennzeichenteil des Anspruches 25 wiedergegebenen Merkmale gelöst. Von Vorteil ist, daß durch die einstückige Anformung der Aufnahmebereiche für die Lagerelemente, insbesondere der Lageraufnahmestellen, an das Mantelrohr, die Anzahl der Einzelbauteile und die Anzahl der Fügevorgänge, insbesondere der Schweißvorgänge, reduziert werden. Außerdem weist das erfindungsgemäße Mantelrohr eine Steifigkeit auf. Der erste und weitere Teil werden über ein Verbindungselement, wie beispielsweise einer Schweißnaht, insbesondere einer Laser- oder Plasmaschweißnaht, miteinander verbunden, womit nur eine geringe örtliche Wärmeentwicklung gegeben ist.

Die Ausbildung nach Anspruch 26 ermöglicht die Verwendung von einfach aufgebauten Biegepressen, die es vor allem ermöglichen, Teile in hohen Stückzahlen und zu niedrigen Herstellkosten zu produzieren.

Von Vorteil sind auch die Fortbildungen nach den Ansprüchen 27 und 28, wodurch die für die Herstellung der Aufnahmebereiche in einem Biegegesenk erforderlichen Umformkräfte gering gehalten werden können.

Gemäß einer Ausbildung nach Anspruch 29 können die Umformkräfte zur Herstellung des Aufnahmebereiches reduziert werden.

Vorteilhaft ist auch eine Ausbildung nach Anspruch 30, wodurch die Aufnahmebereiche unmittelbar vom Mantelrohr ausgebildet werden und keine zusätzlichen Umformungsvorgänge zur Herstellung der Lageraufnahmestellen erforderlich sind oder die Anordnung von Lageraufnahmestellen erforderlich macht.

Vorteilhaft ist auch eine Ausführung nach Anspruch 31, wodurch der Bauteil nur einer örtlichen, minimalen Wärmeeinbringung ausgesetzt und dadurch eine weitestgehend toleranzfreie Konstruktion herstellbar ist.

Durch die Ausgestaltungen nach den Ansprüchen 32 und 33 wird ein über die gesamte Länge, eine hohe Steifigkeit aufweisendes Mantelrohr geschaffen, das durch wenige Bauteile gebildet ist.

Die Erfindung wird im nachfolgenden anhand der in den Zeichnungen dargestellten Ausführungsbeispiele näher erläutert.

Es zeigen:
- Fig. 1: eine perspektivische Ansicht des Mantelrohres mit Lageraufnahmestellen gemäß der Erfindung;
- Fig. 2: das Mantelrohr in Stirnansicht vergrößert und geschnitten gemäß den Linien II - II in Fig. 1;
- Fig. 3: ein Mantelrohr mit Lageraufnahmestellen, Lagern, Verstärkungsleiste und einer Hülse in Seitenansicht geschnitten und in vereinfachter Darstellung;
- Fig. 4: die Verstärkungsleiste in Draufsicht und in vergrößerter Darstellung;
- Fig. 5: die Verstärkungsleiste, geschnitten gemäß den Linien V - V in Fig. 4 ;
- Fig. 6: eine andere Ausführungsvariante des Mantelrohres in Stirnansicht geschnitten;
- Fig. 7: eine weitere Ausführungsvariante des Mantelrohres in Stirnansicht geschnitten;
- Fig. 8: eine andere Ausführungsvariante eines erfindungsgemäßen Lagerungskastens mit einem Mantelrohr und einem Tragarm in perspektivischer Ansicht;
- Fig. 9: einen flächigen Zuschnitt- und/oder Stanz- und/oder Biegeteil in Draufsicht und in stark vereinfachter, schematischer Darstellung;
- Fig. 10: eine weitere Ausführungsvariante eines erfindungsgemäßen Lagerungskastens mit dem Mantelrohr und dem Tragarm in perspektivischer Ansicht und in stark vereinfachter, schematischer Darstellung;
- Fig. 11: das Mantelrohr in Stirnansicht, geschnitten gemäß den Linien XI-XI in Fig. 10 und in stark vereinfachter, schematischer Darstellung;
- Fig. 12: eine andere Ausführungsvariante eines erfindungsgemäßen Lagerungskastens mit dem Mantelrohr und dem Tragarm in perspektivischer Ansicht und in stark vereinfachter, schematischer Darstellung;
- Fig. 13: eine andere Ausführungsvariante eines erfindungsgemäßen Lagerungskastens mit dem Mantelrohr im Längsschnitt gemäß der Fig. 15 mit den erfindungsgemäßen Lagerungselementen in stark vereinfachter, schematischer Darstellung;
- Fig. 14: den Lagerungskasten in Seitenansicht und in stark vereinfachter, schematischer Darstellung;
- Fig. 15: den Lagerungskasten in perspektivischer Ansicht und in stark vereinfachter, schematischer Darstellung;
- Fig. 16: einen Teilbereich des Aufnahmebereiches für das Lagerungselement nach Fig. 13 im Längsschnitt und in stark vereinfachter, schematischer Darstellung;
- Fig. 17: das Mantelrohr und die Lenkwelle mit einer anderen Ausführungsvariante der Anordnung der Lagerungselemente im Längsschnitt und in stark vereinfachter, schematischer Darstellung;
- Fig. 18: das Mantelrohr und die Lenkwelle mit einer weiteren Ausführungsvariante der Anordnung des Lagerungselementes im Längsschnitt und in stark vereinfachter, schematischer Darstellung;
- Fig. 19: das Mantelrohr und die Lenkwelle mit einer weiteren Ausführungsvariante der Anordnung des Lagerungselementes im Längsschnitt und in stark vereinfachter, schematischer Darstellung;
- Fig. 20: einen Teilbereich des erfindungsgemäßen Lagerungskastens mit einer anderen Ausführung des Aufnahmebereiches an einer Außenseite des Mantelrohres und das Lagerelement im Längsschnitt und in stark vereinfachter schematischer Darstellung;
- Fig. 21: einen Teilbereich des erfindungsgemäßen Lagerungskastens mit einer weiteren Ausführung des Aufnahmebereiches an einer Innenseite des Mantelrohres und das Lagerelement im Längsschnitt und in stark vereinfachter, schematischer Darstellung;
- Fig. 22: einen Teilbereich des erfindungsgemäßen Lagerungskastens mit einer anderen Ausführung des Aufnahmebereiches an einer Außenseite des Mantelrohres und das Lagerelement im Längsschnitt und in stark vereinfachter, schematischer Darstellung;
- Fig. 23: einen Teilbereich des erfindungsgemäßen Lagerungskastens mit einer anderen Ausführung des Aufnahmebereiches an einer Innenseite des Mantelrohres und das Lagerelement im Längsschnitt und in stark vereinfachter, schematischer Darstellung;
- Fig. 24: einen Teilbereich des erfindungsgemäßen Lagerungskastens mit einer anderen Ausführung des Aufnahmebereiches zwischen einer Außen- und Innenseite des Mantelrohres und das Lagerelement im Längsschnitt und in stark vereinfachter, schematischer Darstellung;
- Fig. 25: einen Teilbereich des erfindungsgemäßen Lagerungskastens mit einer anderen Ausführung des Aufnahmebereiches zwischen einer Außen- und Innenseite des Mantelrohres und das Lagerelement im Längsschnitt und in stark vereinfachter, schematischer Darstellung;
- Fig. 26: das erfindungsgemäße Lagerteil bzw. den Außenring in perspektivischer Ansicht und in stark vereinfachter, schematischer Darstellung;
- Fig. 27: einen Teilbereich des erfindungsgemäßen Mantelrohres mit einer anderen Ausführung des erfindungsgemäßen Aufnahmebereiches in perspektivischer Ansicht und in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

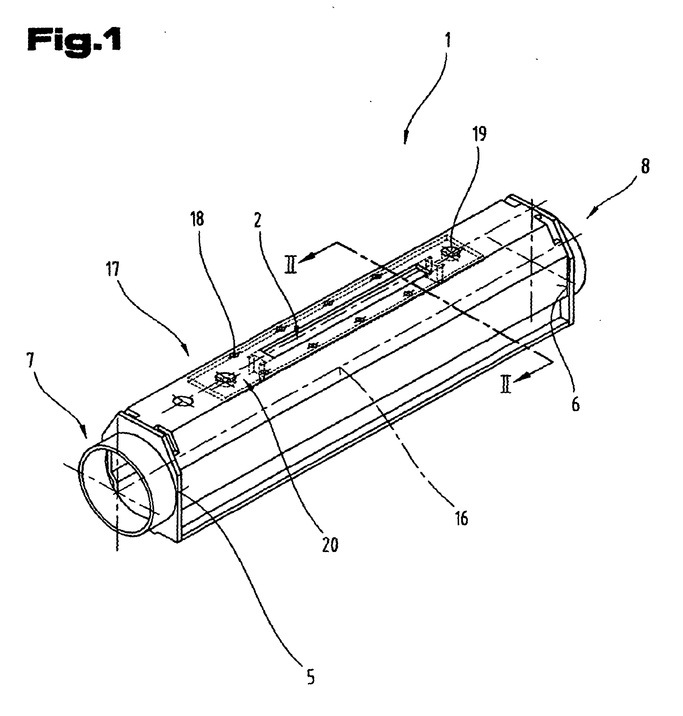

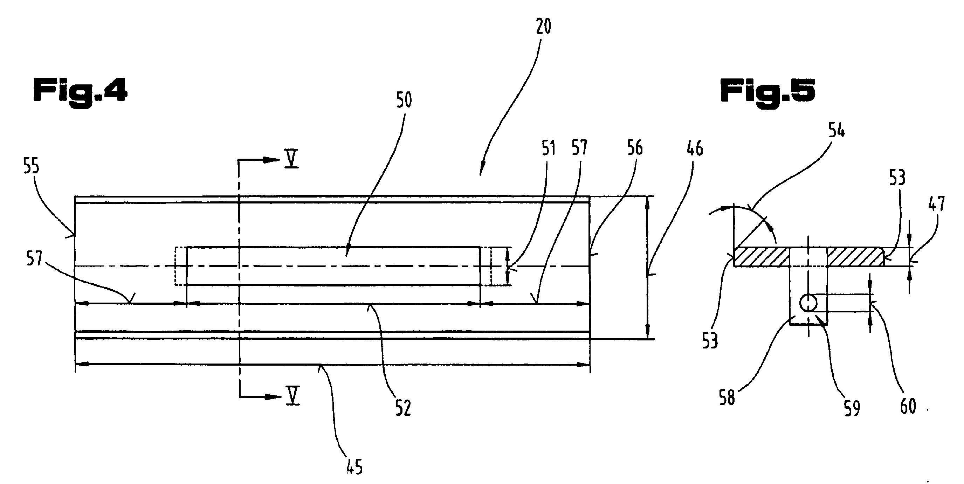

In den Fig. 1 bis 7 ist ein ein Mantelrohr 1 und Aufnahmebereiche für Lagerelemente umfassender Lagerungskasten bzw. Teile davon in unterschiedlichen Ansichten und in stark vereinfachter, schematischer Darstellung gezeigt. Die Aufnahmebereiche sind durch Lageraufnahmestellen gebildet. Auf die detaillierten Ausführungen wird im folgenden näher darauf eingegangen.

In den Fig. 1 bis 5 ist ein Mantelrohr 1 gezeigt, das aus einem mit einer Ausnehmung 2 ausgestatteten oberen Teil 3 und einer diesem gegenüberliegenden unteren Teil 4 gebildet ist. Das Mantelrohr 1, wie beispielsweise in Kraftfahrzeugen eingesetzt, besitzt an den gegenüberliegenden endseitigen Stirnflächen 5 und 6 Lageraufnahmestellen 7 und 8, die insbesondere als Lagersitzringe oder Lagerschalen ausgebildet sind und mit dem Mantelrohr 1 über ein Verbindungselement verbunden, beispielsweise verschweißt und/oder geklebt sind. Die zur Aufnahme von Lagern 9 und 10, insbesondere Kugellagern, ausgebildeten fugenlosen rohrförmigen Lageraufnahmestellen 7 und 8 sind mit einem Innendurchmesser 11 und einem Außendurchmesser 12 ausgeführt und besitzen eine an die Stirnflächen 5,6 angebundene ebenflächige Tragplatte. Die als durchgehend kreisförmig und mit einer Breite 13 ausgeführten fugenlosen Lageraufnahmestellen 7 und 8 bilden einen Rohrabschnitt aus, der im Rollverfahren oder Tiefziehverfahren etc. hergestellt wird. Bevorzugt wird die in Richtung der Fahrerkabine weisende Lageraufnahmestelle 7 mit einer größeren Breite ausgeführt, als eine dieser gegenüberliegende Lageraufnahmestelle 8. Die Lageraufnahmestellen 7 und 8 können derart ausgeführt sein, daß die Lager 9 und 10 mit den Lageraufnahmestellen 7 und 8 fix verbunden sind, beispielsweise eingepreßt, angeschweißt, geklebt usw. und/oder daß ein vom Lager 9 und 10 ausgebildeter Außenring 14 mit der Lageraufnahmestelle 7 und 8 einen einteiligen oder zweiteiligen Bauteil bildet. Die für die Verstellung und Führung der Länge einer Lenkwelle 15 in Richtung einer Längsmittelachse 16, erfordert die am oberen Teil 3 des Mantelrohres 1 angebrachte Ausnehmung 2, die als Längsschlitz ausgeführt sein kann, um eine Variierung der Bedienungsposition zu gewähren. Das Mantelrohr 1 ist an einer Oberfläche 17 des oberen Teils 3 mit mehreren am Umfang verteilten Bohrungen 18 und 19 für die Verbindung einer Verstärkungsleiste 20 mit dem Mantelrohr 1 versehen. Die innenliegende, an einer Basis 21 parallel zur Längsmittelachse 16 angebrachte Verstärkungsleiste 20 dient zur Versteifung der an der Oberfläche 17 angebrachten Ausnehmung 2 des oberen Teils 3 und wird von außen oder innen, bevorzugt von außen durch eine Schweißverbindung mit dem Mantelrohr 1 verbunden. Für eine Schweißverbindung können alle beliebigen Schweißverfahren, insbesondere Plasmaschweißen oder Laserschweißen etc. angewendet werden, die eine Verbindung zwischen der Verstärkungleiste 20 und dem Mantelrohr 1, insbesondere dem oberen Teil 3 und/oder zwischen dem oberen Teil 3 und dem unteren Teil 4 und/oder zwischen dem Mantelrohr 1 und einer ebenflächigen Platte der Lageraufnahmestellen 7 und 8 etc. mit oder ohne Zusatzwerkstoff ermöglichen.

Vorn oberen Teil 3 mit einer Höhe 22 und dem unteren Teil 4 mit einer Höhe 23 ausgebildete Stirnflächen 24 und 25 bilden eine parallel zur Oberfläche 17 verlaufende imaginäre Teilungsebene 26 aus, auf der eine senkrecht stehende Symmetrieachse 27 angeordnet ist. Bevorzugt wird die Höhe 22 des oberen Teils 3 größer als die vom unteren Teil 4 ausgebildete Höhe 23 ausgeführt. Eine Wandstärke 28 des oberen Teils 3 entspricht einer Wandstärke 29 des unteren Teils 4 und bleibt zweckmäßig über einen gesamten Querschnitt 30 konstant. Der obere Teil 3 mit einer Höhe 22 weist einen mehreckigen, beispielsweise trapezförmigen oder U-förmigen Querschnitt 30 auf, wobei ein an einer Oberkante 31 der Oberfläche 17 ausgebildetes Breitenmaß 32 kleiner ist, als ein parallel zum Breitenmaß 32 angeordnetes Außenmaß 33. Die zwischen der Oberkante 31 des oberen Teils 3 und der imaginären Teilungsebene 26 ausgebildeten Teile von Seitenschenkeln 34 sind in Richtung der Höhe 22 geneigt zueinander verlaufend angeordnet und erweitern sich mit zunehmendem Abstand von der Basis 21 gemäß einem Winkel 35 bis zu einem parallel zur Symmetrieachse 27 angeordneten Zwischenteil 36 mit einem Außenmaß 37, der im anschließenden Bereich eine leichte Verjüngung aufweist. Dem schließt sich ein parallel zur Symmetrieachse 27 nachgeordneter Endteil 38 an, der mit den beiden Stirnflächen 24 die Kontaktstelle zum unteren Teil 4 bildet, welcher mit einem Verbindungselement mit dem unteren Teil 4 verbunden wird. Durch die Verwendung einer einheitlichen Wandstärke 28 und 29 wird an den Stirnflächen 24 und 25 des oberen Teils 3 und des unteren Teils 4 eine Überlappung an der imaginären Teilungsebene 26 geschaffen, die beispielsweise der halben Wandstärke 28 und 29 entsprechen kann. Die durch die Überlappung gebildete Hohlkehle 39 an einer der Symmetrieachse 27 gegenüberliegenden Außenseite 40 oder einer der Symmetrieachse 27 zugewendeten Innenseite 41 des Mantelrohres 1 ist für die Herstellung einer Verbindung, insbesondere einer Schweißverbindung, von großem Vorteil. Durch eine derartige Ausführung wird eine Vereinfachung der Vorbereitungsarbeiten, die im weiteren Sinne für die Verbindung des oberen Teils 3 und des unteren Teils 4 zu tätigen sind, erreicht, da die Ausführung von Montageeinrichtungen konstruktiv einfacher und wirtschaftlich gestaltet werden können. Die Montagearbeiten werden dadurch wesentlich vereinfacht und beschleunigt.

Der untere Teil 4 mit der Höhe 23 bildet einen beispielsweise U-förmigen Querschnitt 42 aus, mit zwei parallel zur Symmetrieachse 27 verlaufenden Seitenschenkel 43, dessen Außenmaß 44 gegenüber dem Außenmaß 33 kleiner, gleich oder größer ausgeführt ist und kann mit dem Außenmaß 37 gleichgesetzt werden. Dementsprechend ergibt sich die Überlappung und eine damit verbundene Überragung der Innenseite 41 oder der Außenseite 40. Es besteht natürlich auch die Möglichkeit, daß sich ein deckungsgleicher Verlauf der Seitenschenkel 34 und 43 ergibt.

Die in Richtung der Längsmittelachse 16 angeordnete, mit einer Länge 45, Breite 46 und einer Stärke 47 rechteckförmige Verstärkungsleiste 20 ist direkt an der Basis 21 unterhalb der mit einer Breite 48 und einer Länge 49 positionierten Ausnehmung 2 des oberen Teils 3 angebracht. Die Verstärkungsleiste 20 besitzt eine in Richtung der Länge 45 angebrachte Ausnehmung 50, insbesondere eine Längsnut, deren Breite 51 und Länge 52 gleich und/oder größer als die Länge 49 und Breite 48 der Ausnehmung 2 des Mantelrohres 1 sind.

Sich über die Länge 45 erstreckende gegenüberliegende und zueinander geneigte Seitenflächen 53 sind gemäß einem Winkel 54 an den Verlauf der Seitenschenkel 34 angepaßt. Zwei an gegenüberliegenden endseitigen Stirnflächen 55 und 56 in einem Abstand 57 senkrecht zur Verstärkungsleiste 20 ausgerichtete Laschen 58 weisen eine mit einem Durchmesser 60 ausgebildete Bohrung 59 für die Aufnahme von Dämpfungsorganen 61, beispielsweise E-lastomerdämpfer, Luftdämpfer oder Federdämpfer etc. auf. Natürlich können die Dämpfungsorgane 61 über alle möglichen Verbindungsarten, beispielsweise Kleben, Pressen, Klemmen, Nieten, etc. an die Laschen 58 angebracht werden. Die durch die Dämpfungsorgane 61 bestehende Endlagendämpfung trägt zur Schonung der Konstruktion bei und gibt zusätzlich auch einen ausreichenden Verstellweg vor.

Die Länge 52 der in der Verstärkungsleiste 20 angebrachten Ausnehmung 50 kann derart ausgeführt werden, daß die direkt unterhalb des Mantelrohres 1 angebrachten Laschen 58 unmittelbar fluchtend und/oder beabstandet am Anfang beziehungsweise Ende der im Mantelrohr 1 angebrachten Ausnehmung 2 positioniert sind. Möglich ist natürlich jede beliebige Anbringung, beispielsweise Nieten, Kleben, Schweißen etc. der Laschen 58 an der Verstärkungsleiste 20, an der die Konstruktion anzupassen ist. Die Verstärkungsleiste 20 kann auch als Zuschnitteil gefertigt werden, an dem die Laschen 58 anzubringen sind oder es werden überstehende und in Richtung der Längsmittelachse 16 weisende Laschen 58 parallel zur Symmetrieachse 27 positioniert. Eine weitere Ausführung besteht darin, daß der obere Teil 3 des Mantelrohres 1 das für die Laschen 58 erforderliche Material in Form von Ausklinkungen bei der Fertigung berücksichtigt und in einem anschließenden Umformvorgang 90° zur Oberfläche 17 des oberen Teils 3 ausgerichtet wird.

Durch die Anbringung der Verstärkungsleiste 20 wird eine robuste und biegesteife Konstruktion des oberen Teils 3 erreicht. Durch diese Ausführung ist es nicht erforderlich die gesamte Konstruktion robuster zu gestalten, was wiederum eine Gewichts- und Materialeinsparung bedeutet. Die Verstärkungsleiste 20 kann aus verschiedensten Materialien gefertigt werden, die eine entsprechende Festigkeit aufweisen, insbesondere Materialien wie Stähle, Kunststoffe aller Art oder glasfaserverstärkte Kunststoffe etc., die in Abstimmung mit einer dafür geeigneten Verbindungsmöglichkeit angewandt werden können.

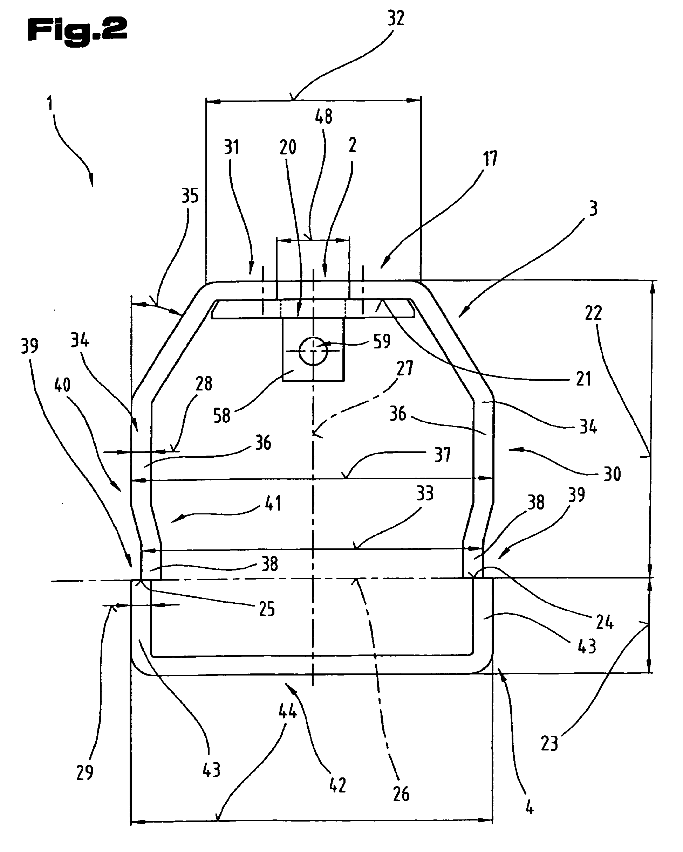

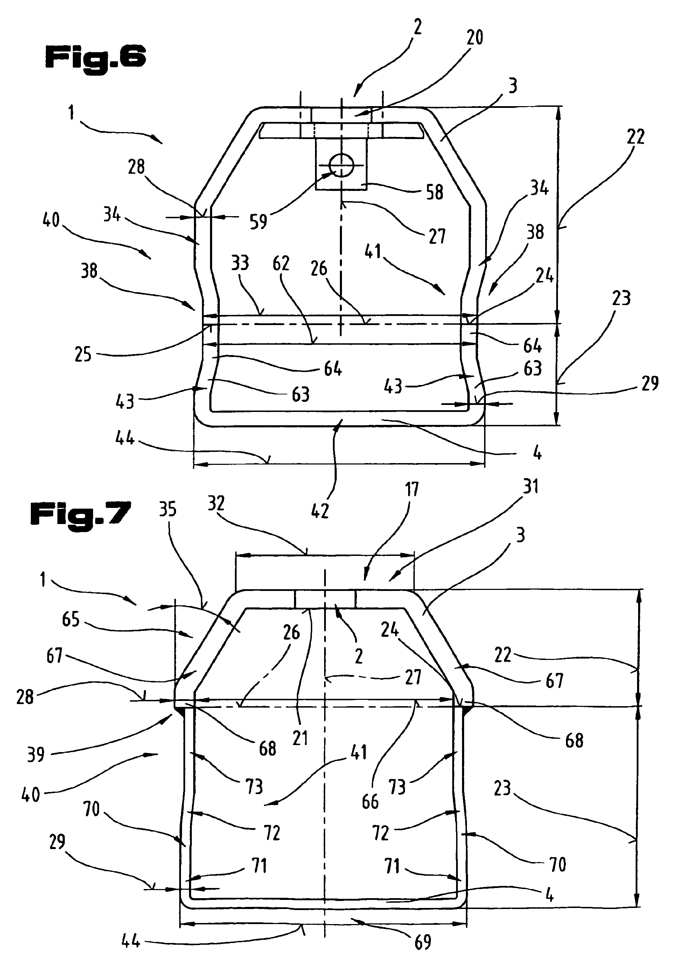

In Fig. 6 ist eine weitere Ausführungsvariante des Mantelrohres 1 gezeigt, das zweiteilig, bestehend aus dem mit der Ausnehmung 2 ausgestatteten oberen Teil 3 und dem gegenüberliegenden unteren Teil 4, die über ein Verbindungselement miteinander verbunden sind, ausgeführt ist. Die Ausbildung des oberen Teils 3 mit der Höhe 22, die bevorzugt größer als die Höhe 23 des unteren Teils 4 ausgeführt ist, entspricht der in der Fig. 2 dargestellten Ausführung. Der obere Teil 3 wird durch die Seitenschenkel 34 und der unterhalb der Ausnehmung 2 an der Basis 21 angeordneten Verstärkungsleiste 20 mit den Laschen 58 und Bohrungen 59 für Dämpfungsorgane 61 (in Fig. 6 nicht dargestellt) gebildet. Die im oberen Teil 3 ausgebildeten Seitenschenkel 34 mit der Wandstärke 28 weisen im Bereich der imaginären Teilungsebene 26 das Außenmaß 33 auf. Die von den Endteilen 38 der Seitenschenkel 34 ausgebildeten Stirnflächen 24 verlaufen deckungsgleich zu der senkrecht zur Symmetrieachse 27 orientierten imaginären Teilungsebene 26 und stellen die Kontaktstelle zum untergeordneten unteren Teil 4 dar. Der untere Teil 4 mit der Höhe 23 und der Wandstärke 29 bildet einen mit dem Außenmaß 44 in etwa U-förmigen Querschnitt 42 aus, dessen Seitenschenkel 43 sich in Richtung der Teilungsebene 26 auf das Außenmaß 62 verjüngen, was bei beispielsweise gleicher Wandstärke 28 und 29 zu einem glatten Übergang ohne Hohlkehle 39 zwischen dem oberen Teil 3 und dem unteren Teil 4 führt. Die von den Seitenschenkel 43 in Richtung der Teilungsebene 26 ausgebildeten Zwischenteile 63 verlaufen geneigt zueinander und schließen an einen parallel zur Symmetrieachse 27 angeordneten Endteil 64 mit seinen senkrecht zur Symmetrieachse 27 positionierten Stirnflächen 25 an.

Selbstverständlich ist es möglich, den oberen Teil 3 und/oder den unteren Teil 4 mit gleicher und/oder unterschiedlicher Wandstärke 28 und 29 auszustatten, was zu einer Überragung der Außenseite 40 und/oder Innenseite 41 im Bereich der imaginären Teilungsebene 26 führen kann.

In der Fig. 7 ist eine andere Ausführungsvariante des Mantelrohres 1 dargestellt, das zweiteilig, bestehend aus dem mit der Ausnehmung 2 ausgestatteten oberen Teil 3 und dem diesen gegenüberliegenden unteren Teil 4 ausgeführt ist. Der obere Teil 3 mit der Höhe 22 weist einen in etwa trapezförmigen Querschnitt 65 auf, wobei ein an der Oberkante 31 der Oberfläche 17 ausgebildetes Breitenmaß 32 kleiner ist, als ein parallel zum Breitenmaß 32 angeordnetes Breitenmaß 66. Die zwischen der Oberkante 31 des oberen Teiles 3 und der imaginären Teilungsebene 26 ausgebildeten Teile von Seitenschenkel 67 sind in Richtung der Höhe 22 geneigt zueinander angeordnet und erweitern sich mit zunehmendem Abstand von der Basis 21 gemäß dem Winkel 35 bis auf parallel zur Symmetrieachse 27 angeordnete Endteile 68 mit dem Breitenmaß 66.

Die von den Endteilen 68 des oberen Teils 3 ausgebildeten Stirnflächen 24 bilden eine parallel zur Oberfläche 17 verlaufende imaginäre Teilungsebene 26 aus, auf der die senkrecht stehende Symmetrieachse 27 angeordnet ist. Die zwischen einer Basis 69 des unteren Teils 4 und der imaginären Teilungsebene 26 ausgebildeten Teile von Seitenschenkel 70 sind in Richtung der Höhe 23 im Anfangsteil 71 parallel zur Symmetrieachse 27 verlaufend angeordnet und schließen an einen sich leicht verjüngenden Zwischenteil 72 an, dem zwei parallel zur Symmetrieachse 27 nachgeordnete Endteile 73 folgen.

Die vom oberen Teil 3 und dem unteren Teil 4 ausgebildeten Wandstärken 28 und 29 ergeben im Bereich der imaginären Teilungsebene 26 eine Überragung an der Außenseite 40 und/oder an der Innenseite 41. Die Wandstärke 29 kann kleiner und/oder gleich und/oder größer als die Wandstärke 28 des oberen Teiles 3 ausgeführt sein. Dementsprechend gilt natürlich auch eine Variierung der Wandstärke 29. Wie in der Fig. 7 dargestellt wird, ergibt sich bei einer unterschiedlichen Wandstärke 28 oder 29 eine Hohlkehle 39 bzw. eine Fügestelle, die eine Erleichterung der Montagearbeiten erlaubt. Durch die Abstimmung der Wandstärke 28 des mit der Ausnehmung 2 geschwächten oberen Teils 3, ist die Verstärkungsleiste 20 nicht mehr erforderlich.

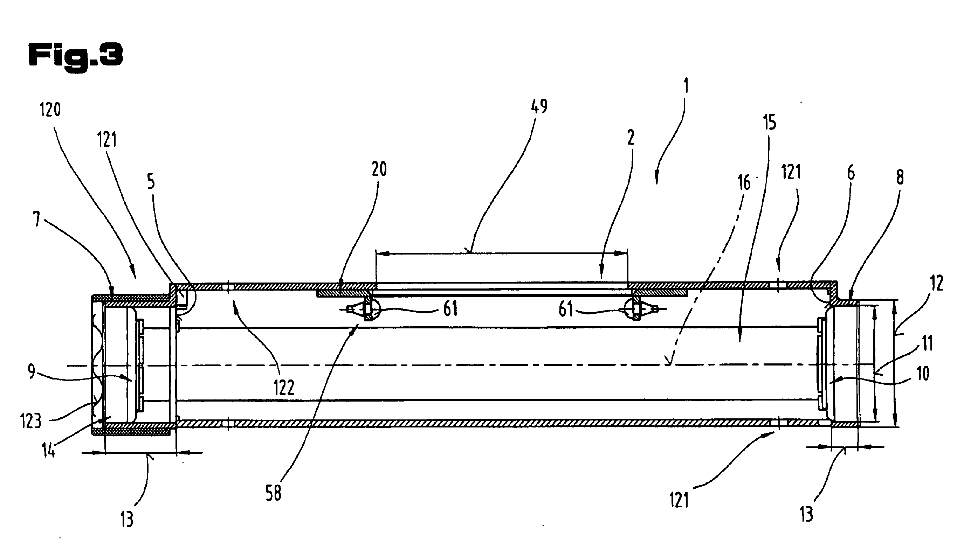

Zusätzlich ist es bei allen angeführten Ausführungsvarianten und wie in Fig. 3 dargestellt möglich, die in Richtung der Fahrerkabine weisende endseitige Stirnfläche 5 oder 6 mit einer aus Kunststoff, Metall etc. gefertigten Hülse 120 zur Aufnahme von nicht weiters dargestellten Armaturen, insbesondere Blinkerarmaturen, Scheibenwischerarmaturen etc., auszustatten.

Es ist bei jeder beschriebenen Ausführungsvariante wahlweise möglich, die Verbindung zumindest einer der fugenlosen Lageraufnahmestelle 7 und/oder 8 mit dem Mantelrohr 1 und/oder die Verbindung des oberen Teils 3 mit dem unteren Teil 4 und/oder die Verbindung der Verstärkungsleiste 20 mit zumindest einem dieser beiden Teile 3 oder 4 beispielsweise über Nieten und/oder Pressen und/oder Kleben und/oder Löten und/oder Schweißen, insbesondere Laserschweißen, etc. herzustellen, da das Laserschweißen bzw. das Löten nur eine örtliche, minimale Wärmeeinbringung erzeugt und keine weiteren Toleranzenabweichungen ergibt. Natürlich können auch alle anderen aus dem Stand der Technik bekannten oder neuentwickelten Verbindungselemente zur Herstellung einer Verbindung herangezogen werden. Das Löten kann ohne oder gegebenenfalls mit einem Zusatzwerkstoff durchgeführt werden.

Wie aus der Fig. 3 ersichtlich, besitzt das Mantelrohr 1 mehrere Schlitze 121 und Bohrungen 122, die eine Positionierung und Zentrierung in der Schweißvorrichtung, Biegevorrichtung etc. zulassen. Eine in Richtung der Fahrerkabine weisende fugenlose Lageraufnahmestelle 7 oder 8 mit dem integrierten Lager 9 oder 10, besitzt eine am Käfig adaptierte Schlangenfeder 123, über die die Toleranzen der Fertigung in axialer Richtung ausgeglichen werden und gleichzeitig die Lenkwelle 15 zwischen den beiden Lageraufnahmestellen 7 und 8 geringfügig vorgespannt wird.

### Verfahren zur Herstellung und Montage:

Ein gegebenenfalls rechteckförmiger und/oder ebenflächiger Zuschnitteil wird in einem Biegevorgang bzw. Abkantvorgang in einer zur Längserstreckung des Zuschnitteiles senkrechten Ebene zu einem mehreckigen Profil ausgebildet, das den oberen Teil 3 oder den unteren Teil 4 bildet. Durch die an der Basis 21 des oberen Teils 3 angebrachten Bohrungen 18, 19 kann die unterhalb als Zuschnitt- und Biegeteil gefertigte Verstärkungsleiste 20 beispielsweise durch eine Laserschweißverbindung angebracht, zweckmäßig durchgeschweißt werden. Für die genaue Positionierung bzw. Zentrierung während der Montage- und Fertigungsarbeiten sind am oberen Teil 3 und am unteren Teil 4 mehreren Bohrungen 122 und Schlitze 121 angebracht. Die von der Schweißvorrichtung vorgegebene Position der oberen und unteren Teile 3 und 4, ermöglicht das exakte Aufeinandersetzen ohne nennenswerte Abweichungen von Toleranzen, wobei die von dem oberen Teil 3 ausgebildeten Seitenschenkel 34 und die vom unteren Teil 4 ausgebildeten Seitenschenkel 43, jeweils der Basis 21 bzw. 69 gegenüberliegend eine zur Teilungsebene 26 planparallele Stirnfläche 24, 25 ausbilden, die als Fügestelle, insbesondere für den Laserschweißvorgang, dienen.

Nachdem die Verstärkungsleiste 20 bevorzugt an die Basis 21 unterhalb der Ausnehmung 2 des oberen Teiles 3 verschweißt worden ist, kann der obere Teil 3 mit dem unteren Teil 4 an der Fügestelle verbunden werden und ergibt das Mantelohr 1, an dem an den beiden gegenüberliegenden Stirnflächen 5, 6 zwei Lageraufnahmestellen 7, 8 adaptiert sind, die beispielsweise einstückig mit dem oberen Teil 3 als Tiefziehteil hergestellt werden und in einem anschließenden Abkantvorgang senkrecht zu einer von der Lenkwelle 15 ausgebildeten Längsmittelachse 16 ausgerichtet und mit diesem Teil 3 verbunden wird. Die Lageraufnahmestellen 7, 8 können natürlich auch als eigenständige Drehteile, Zieh- oder Rollteile an eine Tragplatte senkrecht positioniert werden, die wiederum mit der Stirnfläche 5, 6 verbunden ist.

Als nächster Montageschritt wird in die dem Lenkrad nähergelegene Lageraufnahmestelle 7 ein aus dem Stand der Technik bekanntes, mit einer Schlangenfeder 123 ausgestattetes Lager 9 beispielsweise eingepreßt und die Lenkwelle 15 in das Mantelrohr 1 eingeschoben und danach das Lager 10 in die Lageraufnahmestelle 8 eingepreßt. Das in Richtung der Längserstreckung axial auftretende Spiel zwischen Lager 9, 10 und Lenkwelle 15 wird mittels einer Schlangenfeder 123 ausgeglichen.

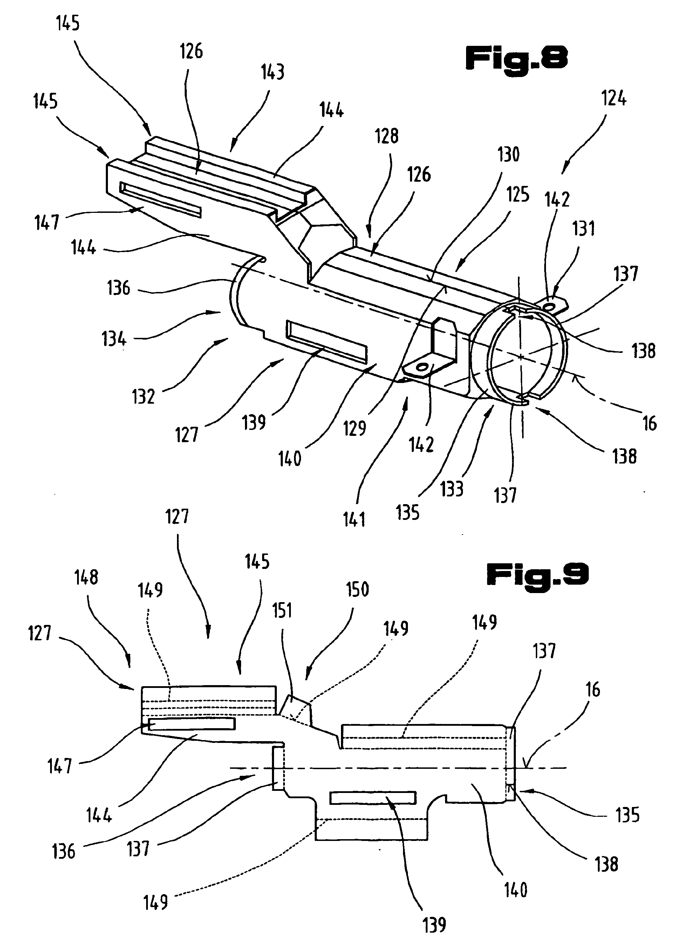

In den gemeinsam beschriebenen Fig. 8 bis 11 sind weitere Ausführungsvarianten eines Lagerungskastens 124 mit einer anderen Ausführung eines Mantelrohres 125 in teilweise perspektivischer Ansicht gezeigt. Das zweckmäßig mehrteilig ausgebildete Mantelrohr 125 weist zumindest zwei in Verbindungsbereichen 126 über ein Verbindungselement verbundene halbschalenförmige Teile 127, 128 auf Stumpf aneinandergelegte Längsstirnflächen 129, 130 bilden den Verbindungsbereich 126 aus, der in einer mit einer senkrechten Längsmittelebene des Lagerungskastens 124 fluchtenden Ebene verläuft. Das Mantelrohr 125 bzw. deren quer zur Längsrichtung einander gegenüberliegenden, miteinander zu verbindenden Teile 127, 128 weist bzw. weisen zwischen an distalen Endbereichen 131, 132 ausgebildeten Aufnahmebereichen 133, 134 für noch näher zu beschreibende Lagerelemente einen mehreckigen Querschnitt auf. Die Lageraufnahmestellen 135, 136 bildenden Aufnahmebereiche 133, 134 werden in den distalen Endbereichen 131, 132 einstückig angeformt, wobei jeder der halbschalenförmigen Teile 127, 128 einen etwa halbkreisförmigen Lagerteil 137 ausbildet. Die an ihren im Verbindungsbereich 125 aneinanderstoßenden Längsstirnflächen 129, 130 der Teile 127, 128 werden über das Verbindungselement miteinander verbunden.

Zwei oder mehrere miteinander zu einer kreisringförmigen Lageraufnahmestelle 135, 136 verbundene Lagerteile 137 weisen jeder für sich im Verbindungsbereich 126 eine Materialrücksetzung 138 auf. Die in Längsrichtung des Lagerungskastens 124 verlaufende, etwa U-förmige, sich über einen Teil einer Breite der Lageraufnahmestelle 135, 136 erstreckende Materialrücksetzung 138 ermöglicht vor allem, daß der durch das Umformen entstehende Grad zu keiner unzulässigen Verformung der Längsstirnflächen 129, 130 im Verbindungsbereich 125 während der Verbindungsherstellung führt und dadurch eine hohe Fertigungsgenauigkeit der Lageraufnahmestellen 135, 136 ermöglicht ist.

Einer der beiden trapezförmig ausgebildeten schalenförmigen Teile 127; 128 weist im Längsverlauf eine in zur Längsmittelachse 16 der Lenkwelle 15 parallel verlaufende, einer Fixiervorrichtung zugeordnete Ausnehmung 139 auf. Ein Teilbereich eines in einer zu der vertikalen Längsmittelebene parallel verlaufenden Ebene liegenden Seitenschenkels 140 ist, um die durch die Anordnung der schlitzförmigen Ausnehmung 139 verursachende Abschwächung der Steifigkeit zu vermeiden, mehrmals abgekantet, sodaß Teile der Seitenschenkel 140 in einem Versteifungsbereich 141 in eine zumindest bereichsweise überdeckenden Lage verbracht werden. Wie aus den Fig. 8 bis 10 ersichtlich, ist das Mantelrohr 125 des Lagerungskastens 124 mit Befestigungslaschen 142 für die Befestigung von nicht weiters dargestellten Anbauteilen versehen, die einstückig am Mantelrohr 125 angeformt sind und die zweckmäßig in einer zu der vertikalen Längsmittelebene senkrecht ausgerichteten horizontalen Längsmittelebene parallel verlaufenden Ebene ausgerichtet sind. In einem der Endbereiche 131; 132 schließt ein jeweils durch die beiden schalenförmigen Teile 127, 128 ausgebildeter und einstückig an diese angeformter rahmenförmiger Tragarm 143 an. Die vertikale Längsmittelebene verläuft durch die durch die stumpf aneinanderstoßenden Längsstinnflächen 129, 130 gebildeten Verbindungsbereiche 126, wobei die vertikale Längsmittelebene des Tragarmes 143 fluchtend mit der vertikalen Längsmittelebene des Mantelrohres 125 verläuft. Der Tragrahmen 143 weist zweckmäßig in einer zu seiner Längserstreckung senkrechten Ebene einen mehreckigen Querschnitt auf. Quer zur Längsrichtung des Tragarmes 143 angeordnete Schenkel 144 von miteinander zu verbindenden Tragarmteilen 145 verlaufen ebenflächig zu zumindest einem der parallel zu der vertikalen Längsmittelebene verlaufenden Teile der Seitenschenkel 140. Die sich zwischen den um ein Breitenmaß 146 voneinander distanzierten Schenkel 144 erstreckenden Tragarmteile 145 sind mehrmals abgekantet und bilden im wesentlichen in einer zu deren Längserstreckung senkrechten Ebene einen etwa U-förmigen Querschnittsverlauf aus.

An den gegenüberliegenden Schenkel 144 ist jeweils eine in zur Längsmittelachse 16 paralleler Richtung und in der gleichen Ebene verlaufende Ausnehmung 147 angeordnet, die jeweils parallel zu der Ausnehmung 139 verläuft. Ein nicht weiters dargestellter, die schlitzförmige Ausnehmung 147 durchsetzender, mit einer ortsfest an der Karosserie des Fahrzeuges angeordneten Halterung verbundener Bolzen bildet eine Schwenkachse, um die der die Lenkwelle 15 aufnehmende Lagerungskasten 124 in einer zu seiner Längserstreckung radialen Richtung verschwenkbar gelagert ist.

Aus einem flächigen Zuschnitt- und/oder Stanz- und/oder Biegeteil 148 - wie in der Fig. 9 dargestellt ist - wird einer der schalenförmigen Teile 127; 128 gebildet. Dieser wird durch zwei das Mantelrohr 125 mit den Lageraufnahmestellen 135, 136 und den Tragarmteil 145 bildenden Teilbereiche gebildet. Der einteilige Zuschnitt- und/oder Stanz- und/oder Biegeteil 148 wird mit den in Längsrichtung der Längsmittelachse 16 parallel verlaufenden Ausnehmungen 139, 147 versehen und nach dem Zuschneiden und/oder Stanzen mittels eines Umformverfahrens, wie beispielsweise Abkanten, Pressen etc., entlang seiner - wie in strichlierten Linien dargestellt - Biegelinien 149 abgekantet. Die zur Bildung des Mantelrohres 125 und des Tragarmteiles 145 ausgebildeten Biegelinien 149 verlaufen bevorzugt parallel zu der Längsmittelachse 16, wohingegen die Biegelinien 149 zur Bildung der Lageraufnahmestellen 135, 136 senkrecht auf die Längsmittelachse 16 verlaufend ausgebildet sind. Zur Versteifung eines Übergangsbereiches 150 zwischen dem Mantelrohr 125 und dem Tragarm 143 sind zwischen diesen flächige Versteifungselemente 151 vorgesehen. Der Zuschnitt- und/oder Stanz- und/oder Biegeteil 148 weist zweckmäßig über die gesamte Länge und/oder Breite eine gleiche Wandstärke, die zwischen 1 mm und 5 mm, insbesondere zwischen 1,5 und 3,5 mm, beispielsweise 2 mm, beträgt, auf.

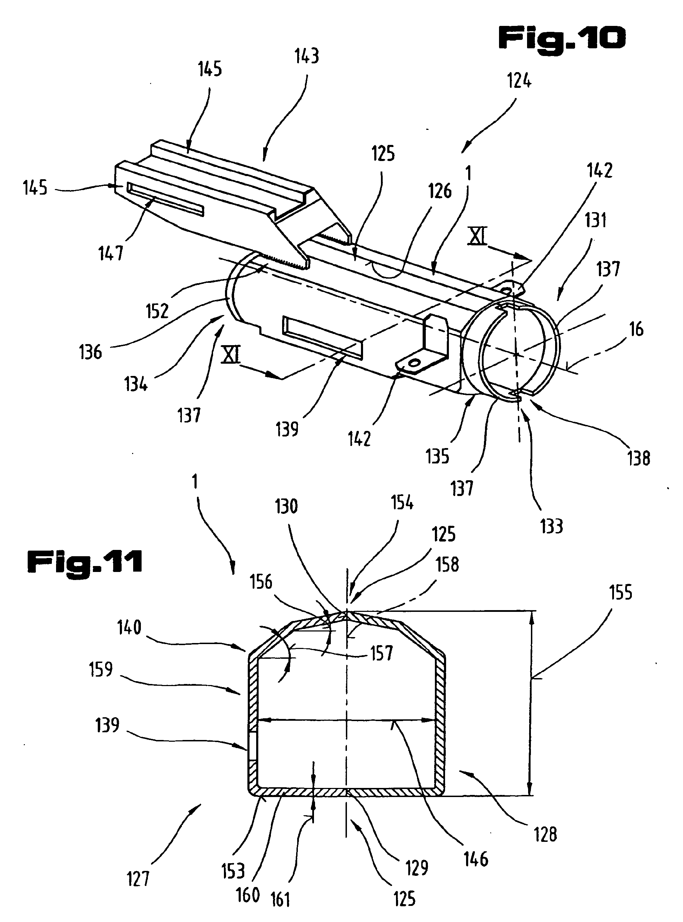

Natürlich besteht auch die Möglichkeit, wie in Fig. 10 dargestellt, den rahmenförmigen Tragarm 143 bzw. die diesen bildenden Tragarmteile 145 über ein Verbindungselement 152 mit dem Mantelrohr 125 form- und/oder kraftschlüssig zu verbinden. Selbstverständlich kann der Tragarm 143 auch als einteiliger Zuschnitt- und/oder Stanz- und/oder Biegeteil 148 hergestellt werden.

In der Fig. 11 ist das durch zwei symmetrisch ausgebildete schalenförmige Teile 127, 128 gebildete Mantelrohr 125 in Stirnansicht geschnitten dargestellt. Die zwischen einer Basis 153 und einem Scheitel 154 des ersten Teiles 127 ausgebildeten Teile von Seitenschenkel 140 sind in Richtung einer Höhe 155 geneigt zueinander verlaufend angeordnet und erweitern sich mit zunehmendem Abstand von dem Scheitel 154 - gemäß Winkel 156, 157 - bis zu einem parallel zu einer Symmetrieachse 158 angeordneten Zwischenteil 159 mit dem Breitenmaß 146. Natürlich kann, wie nicht weiters dargestellt, auch ein an diesem anschließender Bereich mit einer die Festigkeit erhöhenden Aufweitung und/oder Verjüngung versehen werden. Dem schließt sich ein parallel zur Längsmittelachse 16 verlaufender, die Basis 153 bildender Endteil 160 an, dessen stirnseitige Längsstirnfläche 129 deckungsgleich mit der Symmetrieachse 158 verläuft. Im Bereich des Scheitels 154 wird von einem geneigten Teil des Seitenschenkels 140 die mit der Symmetrieachse 158 deckungsgleich bzw. fluchtend verlaufende Längsstirnfläche 129 ausgebildet. Die in zur Längsmittelachse 16 parallel verlaufende Ausnehmung 139 ist zweckmäßig in dem Zwischenteil 159 des ersten Teiles 127 angeordnet.

Der dem ersten Teil 127 gegenüberliegende weitere Teil 128 weist zwischen dem Scheitel 154 und der Basis 153 in Richtung der Höhe 155 geneigt zueinander verlaufend angeordnete Teile von Seitenschenkel auf, die sich mit zunehmendem Abstand von dem Scheitel 154 - gemäß den Winkeln 156, 157 - bis zu dem parallel zur Symmetrieachse 158 angeordneten Zwischenteil 159 erstrecken. Dem schließt sich der senkrecht zur Symmetrieachse 158 nachgeordnete, die Basis 153 bildende Endteil 160 an. Die Längsstirnflächen 130 des Endteiles 160 und des Teiles des Seitenschenkels 140 im Bereich des Scheitels 154 des Teiles 128 werden an die Längsstirnflächen 129 des gegenüberliegenden ersten Teiles 127 stumpf aneinandergelegt und in dem dadurch gebildeten Verbindungsbereich 126 über ein form- und/oder kraftschlüssiges Verbindungselement miteinander verbunden. Der erste Teil 127 und der weitere Teil 128 weisen zweckmäßig eine gleiche Wandstärke 161 über den gesamten Querschnitt auf. Durch das Umformen wird ein Teilbereich, zweckmäßig die gegenüberliegenden Endbereiche 131, 132 der einen mehreckigen Querschnitt aufweisenden Teile 127, 128 zu einem halbkreisförmigen Lagerteil 137 ausgebildet.

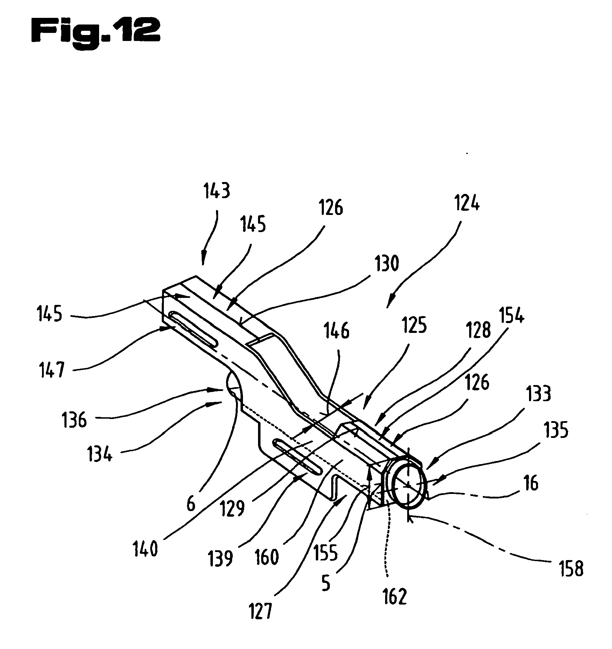

In der Fig. 12 ist eine andere Ausführungsvariante eines Lagerungskastens 124 in perspektivischer Ansicht dargestellt. Dieser umfaßt das Mantelrohr 125 mit den Aufnahmebereichen 133, 134 bzw. die diese bildenden Lageraufnahmestellen 135, 136 und die mit den schalenförmigen Teilen 127, 128 einstückig angeformten, einen Tragarm 143 bildenden Tragarmteile 145 sowie eine flächige Tragplatte 162. Die symmetrisch ausgebildeten Teile 127, 128 weisen zwischen dem Scheitel 154 und dem vorkragenden Endteil 160 in Richtung der Höhe 155 geneigt zueinander verlaufend angeordnete Teile von Seitenschenkel auf, die sich mit zunehmendem Abstand von dem Scheitel 154 - gemäß dem Winkel 156 - bis zu dem parallel zur Symmetrieachse 158 angeordneten Endteil 160 erstrecken. Die Längsstirnflächen 130 des Endteiles 160 und des Teiles des Seitenschenkels 140 im Bereich des Scheitels 154 des Teiles 128 werden an die Längsstirnflächen 129 des gegenüberliegenden ersten Teiles 127 stumpf aneinandergelegt und in dem dadurch gebildeten Verbindungsbereich 126 über ein form- und/oder kraftschlüssiges Verbindungselement miteinander verbunden. Die die Lageraufnahmestellen 135, 136 bildende Tragplatte 162 wird aus einem streifenförmigen Zuschnitt- und/ oder Stanz- und/oder Biegeteil gebildet, wobei vorerst die Lageraufnahmestellen 135, 136 gefertigt werden. Im Anschluß daran werden diese in einer zur Längsachse senkrechten Richtung verlaufenden Achse abgekantet. Die sich über die Länge und über das Breitenmaß 146 erstreckende Tragplatte 162 wird mit dessen gegenüberliegenden, parallel zur Längsmittelachse 16 und parallel zueinander verlaufenden Längsseitenflächen mit den Seitenschenkeln 140 kraft- und/oder formschlüssig verbunden. Die die Aufnahmebereiche 133, 134 bildenden Lageraufnahmestellen 135, 136 werden durch fugenlose, geschlossene Lagerringe gebildet. Zweckmäßig weist die streifenförmige Tragplatte 162 eine zu den Teilen 127, 128 des Mantelrohres 125 und der Tragarmteile 145 größere Wandstärke auf. Eine Breite der Tragplatte 162 ist zumindest geringfügig kleiner bemessen als ein Breitenmaß 146 zwischen den gegenüberliegenden Endteilen 160 der Seitenschenkel 140. Die Teile 127, 128 sind über ein Verbindungselement mit der Tragplatte 162 zumindest bereichsweise verbunden.

Die in den Tragarmteilen 145 angeordneten schlitzförmigen Ausnehmungen 147 verlaufen jeweils parallel zueinander und parallel zu der Längsmittelachse 16 und parallel zu der in dem Teil 127 angeordneten Ausnehmung 139.

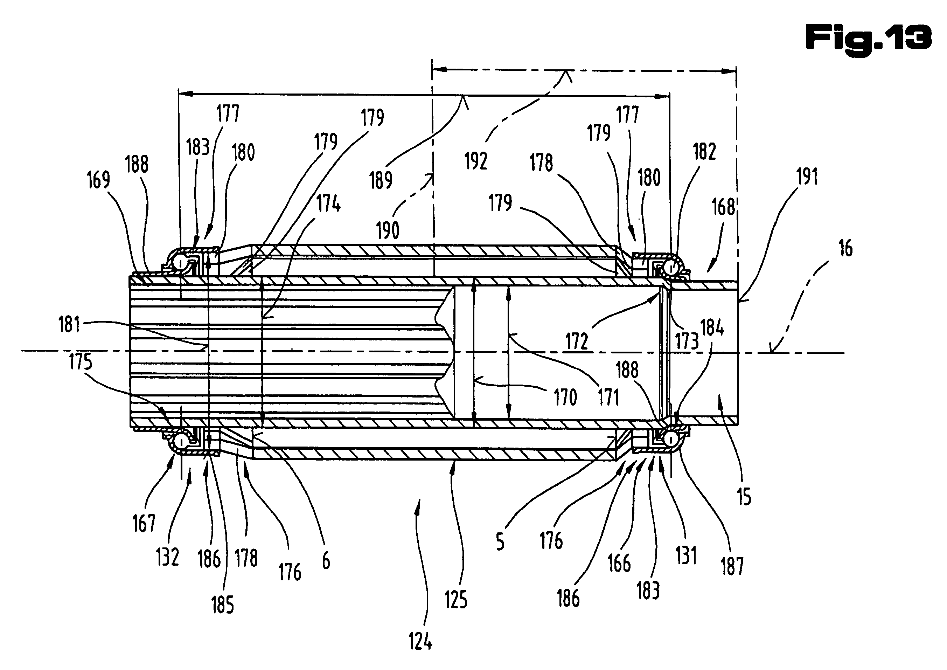

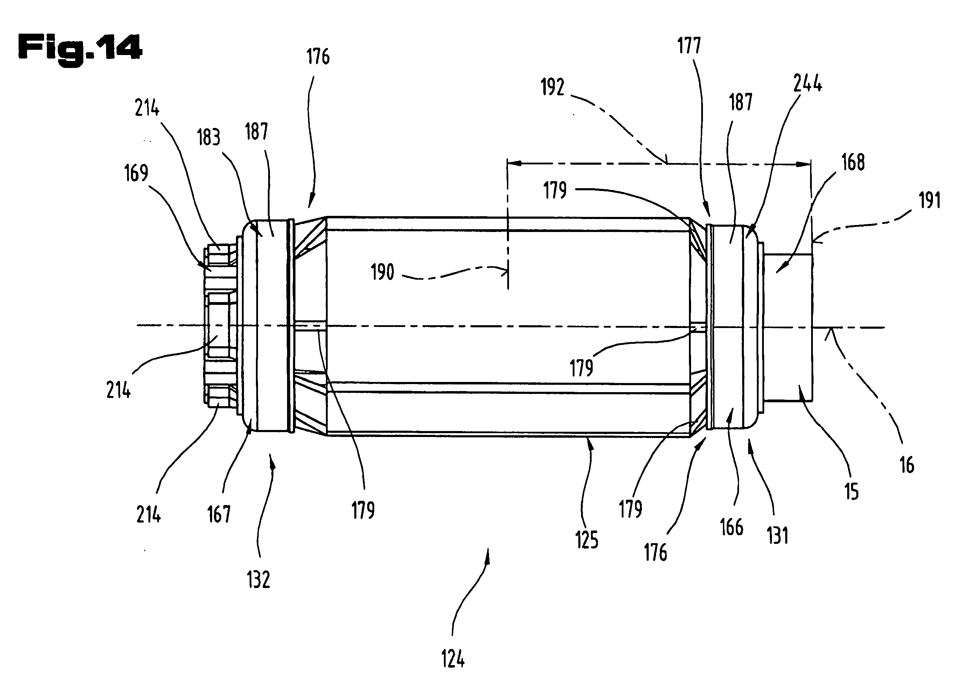

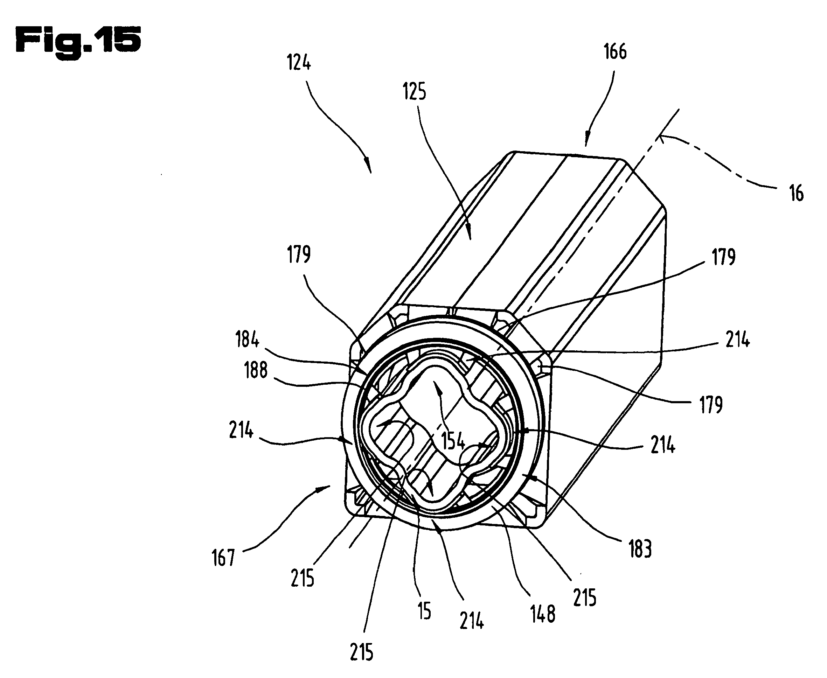

In den gemeinsam beschriebenen Fig. 13 bis 16 ist ein Lagerungskasten 124 für die Lagerung der Lenkwelle 15 in unterschiedlichen Ansichten dargestellt. Das die Lenkwelle 15 zumindest teilweise umgebende Mantelrohr 125 ist an seinen distalen Endbereichen 131, 132 mit Lagerelementen 166, 167 versehen, über welche die Lenkwelle 15 verdrehbeweglich und in axialer Richtung der Lenkwelle 15 und in einer dazu radialen Richtung im wesentlichen spielfrei gehaltert ist. Es sei an dieser Stelle darauf hingewiesen, daß die in den Fig. 1 bis 7 dargestellten, beispielhaften Ausführungen des Mantelrohres 1 für den Lagerungskasten 124 verwendet werden können, aber nicht müssen. Der Lagerungskasten 124 kann natürlich mit allen aus dem Stand der Technik bekannten ein- oder mehrteiligen Mantelrohren 1; 125 versehen werden. Wie in diesem Ausführungsbeispiel gezeigt, bildet die als Hohlwelle ausgebildete Lenkwelle 15 mehrere unterschiedliche Querschnitte aufweisende Lenkwellenabschnitte 168, 169 aus, wovon einer der Lenkwellenabschnitte 168 einen konzentrisch um eine Längsmittelachse 16 der Lenkwelle 15 umlaufenden Kreisringquerschnitt und der diesem Lenkwellenabschnitt 168 nachgeordnete Lenkwellenabschnitt 169 in einer zu seiner Längserstreckung senkrechten Ebene einen etwa kleeblattförmigen Querschnitt aufweist. Der erste Lenkwellenabschnitt 168 weist in seinem Längsverlauf eine Querschnittsverjüngung, insbesondere eine Verjüngung von Außen- und Innendurchmesser, sodaß durch die Abstufung zwischen den sich verjüngenden Außendurchmesser 170 und Innendurchmesser 171 eine eine Lagerstelle 172 bildende Schulter 173 gebildet ist. Der Außendurchmesser 170 des ersten Lenkwellenabschnittes 168 begrenzt eine Außenabmessung 174 des im Querschnitt etwa kleeblattförmig ausgebildeten weiteren Lenkwellenabschnittes 169. Im Längsverlauf des weiteren Lenkwellenabschnittes 169 ist eine weitere Lagerstelle 175 für das Lagerelement 167 vorgesehen.

Wie in dieser beispielhaften Ausführung gezeigt, ist das Mantelrohr 125 an den distalen Endbereichen 131, 132 mit Aufnahmebereichen 176, insbesondere Lageraufnahmestellen 177, für die Lagerelemente 166, 167, die durch Abkanten bzw. Abstrecken und/oder Stanzen und/oder Tiefziehen etc. einstückig am Mantelrohr 125 angeformt sind, versehen.

Sich zu den Stirnflächen 5, 6 in abgewandter Richtung konisch verjüngende Zwischenbereiche 178 sind in Längsrichtung derselben durch konzentrisch um die Längsmittelachse 16 umlaufende und durch Schlitze 179 voneinander getrennte Aufnahmesegmente 180 bildende Kreisbogensegmente begrenzt. Die über den Umfang durch die sich diametral gegenüberliegenden Schlitze 179 voneinander getrennten Aufnahmesegmente 180 bilden die einen Außendurchmesser 181 aufweisenden Aufnahmebereiche 176, insbesondere Lageraufnahmestellen 177, aus. Die die Lenkwelle 15 gegenüber dem Mantelrohr 125 verdrehbeweglich lagernden Lagerelemente 166, 167 umfassen zumindest zwei über wenigstens einen Zwischenteil 182, insbesondere einem Wälzkörper, relativ zueinander verstellbare Lagerteile 183, 184, wovon einer der Lagerteile 183 den gegenüberliegenden Aufnahmebereichen 176 zugeordnet ist und über zumindest ein form- und/oder kraftschlüssiges Verbindungselement 185 in durch die Aufnahmebereiche 176 am Mantelrohr 125 und den Lagerteilen 183 gebildeten Überlappungsbereichen 186 das Mantelrohr 125 und die Lagerelemente 166, 167 zueinander positioniert verbunden sind.

Der weitere, an die Querschnittsform der Lenkwelle 15 bzw. der Lenkwellenabschnitte 168, 169 angepaßte Lagerteil 184 ist über das Verbindungselement 185 gegebenenfalls form- und/oder kraftschlüssig mit der Lenkwelle 15 verbunden. Das Verbindungselement 185 kann beispielsweise durch eine Schweißnaht, bevorzugt durch eine Laser- oder Plasmaschweißnaht, eine Kleberschichte oder einer Lötverbindung gebildet werden. Das Laser- oder Plasmaschweißen kann mit oder ohne Zusatzwerkstoff, bevorzugt ohne, durchgeführt werden. Die etwa schalen- bzw. topfförmig ausgebildeten, einen Außenring 187 und Innenring 188 bildenden Lagerteile 183, 184 werden zweckmäßig aus einem ebenflächigen Zuschnitteil im Tiefzieh- bzw. Abstreckverfahren und/oder Stanzverfahren hergestellt. Natürlich können die Lagerteile 183, 184 auch über zerspannende Fertigungsverfahren hergestellt werden.

Die in Längsrichtung der Lenkwelle 15 voneinander distanzierten, von den gegenüberliegenden Aufnahmebereichen 176 aufgenommenen oder unmittelbar an dem Mantelrohr 125 angeordneten Lagerelemente 166, 167 sind um einen verstellbaren bzw. veränderbaren Längsabstand 189 voneinander beabstandet. Zumindest eines der Lagerelemente 166 wird nach Festlegung der Position gegenüber dem Mantelrohr 125 und/oder der Lenkwelle 15 und/oder dem weiteren Lagerelement 167 positioniert gehalten und fixiert, wonach das weitere Lagerelement 167 zur Justierung in zur Längsmittelachse 16 paralleler Richtung verschoben wird. Nach Erreichen einer vorgesehenen Position wird auch dieses Lagerelement 167 gegenüber dem Mantelrohr 1 und/oder der Lenkwelle 15 positioniert fixiert. Dazu ist zweckmäßig der dem Aufnahmebereich 176 zugeordnete Außenring 187 längenverschiebbar ausgebildet, wobei der Innenring 188 gleichermaßen mitbewegt wird.

Die Lagerelemente 166, 167, insbesondere die Lagerteile 183, werden im zusammengesetzten Zustand in eine sich mit Aufnahmebereichen 176 überdeckenden Position verbracht. Der Innenring 188 kann gegebenenfalls an der kreisbogenförmig gekrümmten Schulter 173 bzw. der diese bildende Lagerstelle 172 abgestützt werden, wonach der Außenring 183 auf dem bzw. gegenüber dem Mantelrohr 125 verstellt positioniert ist. Ist der zur Längsmittelachse 16 parallel gemessene und vorbestimmbare Längsabstand 189 zwischen den Lagerelementen 166, 167 eingestellt, wird zumindest einer der Lagerteile 183, 184, zweckmäßig beide Lagerteile 183, 184, über das Verbindungselement 185 beispielsweise mit den Aufnahmebereichen 176 und/oder der Lenkwelle 15 positioniert verbunden. Das Verbindungselement 185 ist bevorzugt durch eine Schweißnaht, insbesondere eine Laser- oder Plasmaschweißnaht, gebildet, wobei die Verbindung mit oder ohne Zusatzwerkstoff hergestellt werden kann. Durch die Verstellmöglichkeit zumindest eines der Lagerelemente 166, 167 und eine mit dieser verbundenen Veränderung des Längsabstandes 189 ist es nunmehr möglich, die Lenkwelle 15 im Bereich zwischen den Lagerstellen 172 und 175 bereichsweise vorzuspannen und auf diese Weise eine vorbestimmbare Rollreibung zwischen der Lenkwelle 15 und den Lagerelementen 166, 167 einzustellen und einen Spielausgleich in Richtung der Längserstreckung der Lenkwelle 15 vorzunehmen. Dadurch können Bauteile, die zur Erzeugung einer Vorspannkraft in Längserstreckung der Lenkwelle 15 wirksam sind, entfallen und der Fertigungsaufwand reduziert werden. Es sei darauf hingewiesen, daß die Vorspannkraft bzw. die Rollreibung derart bestimmt wird, daß die zwischen den Lagerstellen 166, 167 gelagerte Lenkwelle 15 keiner in zur Längsmittelachse 16 senkrechter Richtung verlaufenden Auslenkung unterliegt und im wesentlichen kein reibungsbedingter Verschleiß in den Lagerelementen 166, 167 gegeben ist.

Durch die weitere Verstellmöglichkeit zumindest eines der Lagerelemente 166, 167, insbesondere zumindest eines der Lagerteile 183; 184, ist die Lenkwelle 15 in Längsrichtung gegenüber dem mit einer Karosserie ortsfest verbundenen Mantelrohr 125 in ihrer Relativlage verstellbar ausgebildet und ein zwischen einem beliebigen Punkt 190 und einer beliebigen Meßmarke 191 vorbestimmtes Einbaumaß 192 einhaltbar bzw. einstellbar. Wie beispielhaft angedeutet, ist das Einbaumaß 192 - wie in strichpunktierten Linien dargestellt - durch einen sich zwischen dem Punkt 190 auf dem Mantelrohr 125 und der Meßmarke 191 auf der Lenkwelle 15 erstreckenden Längsabstand eindeutig vorgegeben. Der Punkt 190 kann beispielsweise durch einen an dieser Stelle zu montierenden weiteren, nicht dargestellten Bauteil etc. und die Meßmarke 191 beispielsweise durch ein stirnseitiges Ende der Lenkwelle 15 vorgegeben werden.

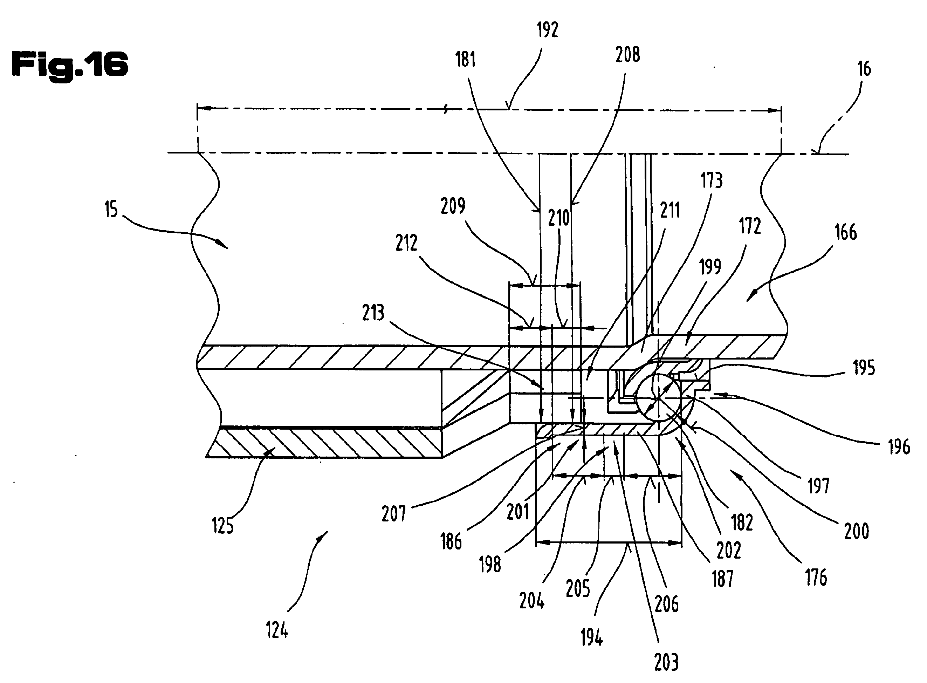

Wie der Fig. 16 besser zu entnehmen ist, ist das auf dem Aufnahmebereich 176 angeordnete, eine Lagerteilbreite 194 aufweisende Lagerelement 166; 167 von einer mit einer Materialdurchtrennung 195 versehenen Bodenplatte 196 begrenzt.

Ein durch die Materialdurchtrennung 195 in der Bodenplatte 196 gebildeter Randsteg 197 ist zu dem zumindest über einen Teil der Lagerteilbreite 194 einen Hohlzylindermantel 198 ausbildenden Außenring 187 zweckmäßig in einer zur Längserstreckung des Hohlzylindermantels 198 senkrecht verlaufenden Ebene senkrecht ausgerichtet. Der im Abkant- oder Tiefziehverfahren spanlos gefertigte Außenring 187 weist an einer dem zwischen dem Innenring 188 und dem Außenring 187 angeordneten Zwischenteil 182 zugewandten Innenseite einen mit einem Durchmesser 199 korrespondierenden Biegeradius 200 auf. Der am Aufnahmebereich 176 des Mantelrohres 125 verstellbar angeordnete Außenring 187 weist mehrere, ausgehend vom sich von den Aufnahmebereichen 176 in Richtung eines stirnseitigen Endes der Lenkwelle 15 erstreckende, unterschiedliche Funktionen aufweisende Teilabschnitte auf, wovon einer der Teilabschnitte durch einen dem Aufnahmebereich 176 zugeordneten Ansatzteil 201 und der diesem gegenüberliegende Teilabschnitt durch einen die Zwischenteile 182 aufnehmenden Führungsteil 202 gebildet sind.

Wird der Innenring 188, wie dargestellt, gegen die eine Anlagefläche bildende Schulter 173 positioniert, ist das Einbaumaß 192 durch Verstellen des Mantelrohres 1; 125 auf bzw, im bzw. gegenüber dem Außenring 183 einstellbar ausgebildet. Der Innenring 188 weist hierzu eine Freistellung auf, sodaß dieser die Schulter 173 nur tangential berührt und auf der Lenkwelle 15 nur mit einem Teilbereich abgestützt ist.

Zwischen den einander gegenüberliegenden, den Ansatzteil 201 und den Führungsteil 202 bildenden Teilabschnitt ist ein zusätzlicher, beispielsweise die gleichen Innenabmessungen wie der Ansatzteil 201 und der Führungsteil 202 aufweisender Verstellbereich 203 angeordnet. Der Ansatzteil 201, der Führungsteil 202 und der Verstellbereich 203 weisen jeder für sich eine Breite 204 bis 206 auf. Die Summe der einzelnen Breiten 204 bis 206 bilden die Lagerteilbreite 194 des Außenringes 187 aus. Es sei darauf hingewiesen, daß die Lagerteilbreite 194 im wesentlichen auf dem den Außenring 187 bildenden Hohlzylindermantel 198 eingetragen ist. Für den Einbauraum eines derartigen Lagerelementes 166, 167 ist eine Wandstärke des Randsteges 197 zu berücksichtigen. Die Breite 205 des Verstellbereiches 203 ist derart gewählt, daß ein in zur Längsmittelachse 16 der Lenkwelle 15 paralleler Richtung verlaufendes minimales Verstellmaß zur Einhaltung eines vorgesehenen Einbaumaßes 192 erreicht werden kann. Die Breite 205 des Verstellbereiches 203 beträgt zwischen 0,5 mm und 10 mm, zweckmäßig zwischen 0,7 mm und 4 mm, beispielsweise 0,6 mm. Eine Wandstärke 207 ist zweckmäßig über den gesamten Querschnitt des Außenringes 187 gleich bemessen und beträgt zwischen 1 mm und 10 mm, zweckmäßig zwischen 2 mm und 6 mm.

Natürlich können sowohl der Außenring 187, als auch der Innenring 188 über zerspannende Herstellungsverfahren, wie z.B. Drehen etc., hergestellt werden. Der Ansatz- und Führungsteil und Verstellbereich 201, 202, 203 weisen jeweils einen gleichen Innendurchmesser 208 auf, der zumindest geringfügig größer ausgebildet ist als der maximale Außendurchmesser 181 des Aufnahmebereiches 176. Natürlich können die einzelnen Innendurchmesser 208 des Ansatz- und Führungsteiles und Verstellbereiches 201, 202, 203 unterschiedlich ausgebildet werden. Dadurch kann der Außenring 187 auf dem Aufnahmebereich 176 aufgeschoben werden. Der Außenring 187 wird während des Aufschiebens des Außenringes 187 auf den eine Breite 209 aufweisenden Aufnahmebereich 176 am Mantelrohr 125 in Längsrichtung und in radialer Richtung geführt. Die Breite 209 des Aufnahmebereiches 176 setzt sich aus einer Breite 210 eines Ansatzteiles 211 und einer Breite 212 eines Verstellbereiches 213 zusammen. Der Ansatzteil 201 des Außenringes 187 bildet im zusammengesetzten Zustand mit dem Mantelrohr 125 im Aufnahmebereich 176 mit seinem Ansatzteil 211 den Überlappungsbereich 186 aus.

Ist ein vorgeschriebenes Einbaurnaß 192, beispielsweise der Längsabstand zwischen der Lenkwelle 15 und dem Mantelrohr 125, einzuhalten, ist durch eine Relatiwerstellung des Außenringes 187 auf den Aufnahmebereich 176 auf bzw. gegenüber dem Mantelrohr 125 der vorgegebene Abstand bzw. das Einbaumaß 192 einzustellen, wonach nach dem Erreichen einer gewünschten Position bzw. Relativlage der verstellte Außenring 187 über ein Verbindungselement 185 mit dem Aufnahmebereich 176 des Mantelrohres 125 zweckmäßig unlösbar verbunden wird.

Nachdem durch die Verstellung und Fixierung des Außenringes 187 des ersten Lagerelementes 166 das Einbaumaß 192 eingestellt wurde, wird über das weitere, dem Lagerelement 166 gegenüberliegende Lagerelement 167 in Richtung des ersten Lagerelementes 166 zugestellt, sodaß eine spielfreie Einstellung und somit ein Toleranzausgleich ohne zusätzliche spielausgleichende Elemente möglich ist.

Der Lagerteil 183 des Lagerelementes 167 weist bevorzugt die gleiche konstruktive Ausgestaltung wie der Lagerteil 183 des Lagerelementes 166 auf. Der weitere Lagerteil 184 bzw. Innenring 188 ist zumindest bereichsweise an die Querschnittsform der Lenkwelle 15 angepaßt. Eine Breite des Innenringes 188 des Lagerelementes 167 setzt sich durch mehrere Teilabschnitte zusammen, wovon einer der im Bereich des Zwischenteiles 182 bzw. der Wälzkörper angeordneten Teilabschnitte durch einen konzentrisch um die Längsmittelachse 16 der Lenkwelle 15 umlaufenden, die Wälzkörper aufnehmenden Führungsteil 202 gebildet ist. Der an diesem Teilabschnitt anschließende weitere Teilabschnitt ist mit mehreren sich diametral gegenüberliegenden und sich über einen Teil des Umfanges erstreckende, formschlüssig mit der Lenkwelle 15 verbundene streifenförmige Vorsprünge 214 versehen. Zweckmäßig erstrecken sich die Vorsprünge 214 ausgehend von dem kreisrunden Teilabschnitt in Richtung eines stirnseitigen Endes der Lenkwelle 15. Diese Vorsprünge 214 werden mit Eckbereichen 215 der etwa kleeblattförmigen Lenkwelle 15 formschlüssig überlappend in Eingriff gebracht, sodaß bei einer Verdrehung der Lenkwelle 15 der Innenring 188 gegenüber dem feststehenden, mit dem Mantelrohr 125 verbundenen Außenring 187 relativ verstellt wird. Natürlich kann der Innenring 188 zusätzlich über das Verbindungselement 185 mit der Lenkwelle 15 form- und/oder kraftschlüssig verbunden werden.

Es sei an dieser Stelle daraufhingewiesen, daß das Verbindungselement 185 zwischen den Lagerteilen 183, 184 und den Aufnahmebereichen 176 im Überlappungsbereich 186 bzw. den diesen bildenden Verbindungsbereich und/oder der Lenkwelle 15 zumindest punktweise oder flächig oder über den gesamten Umfang angeordnet ist.

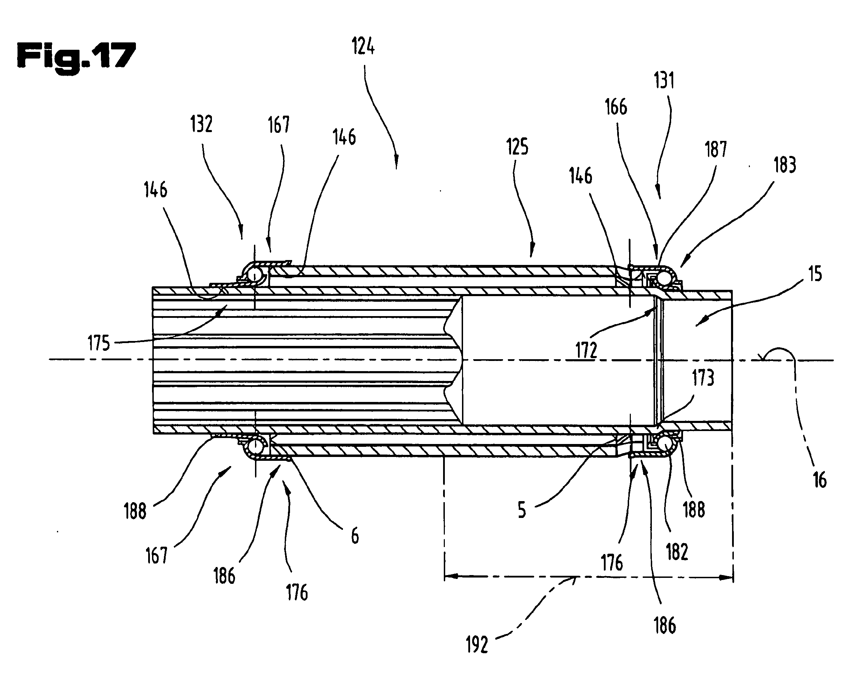

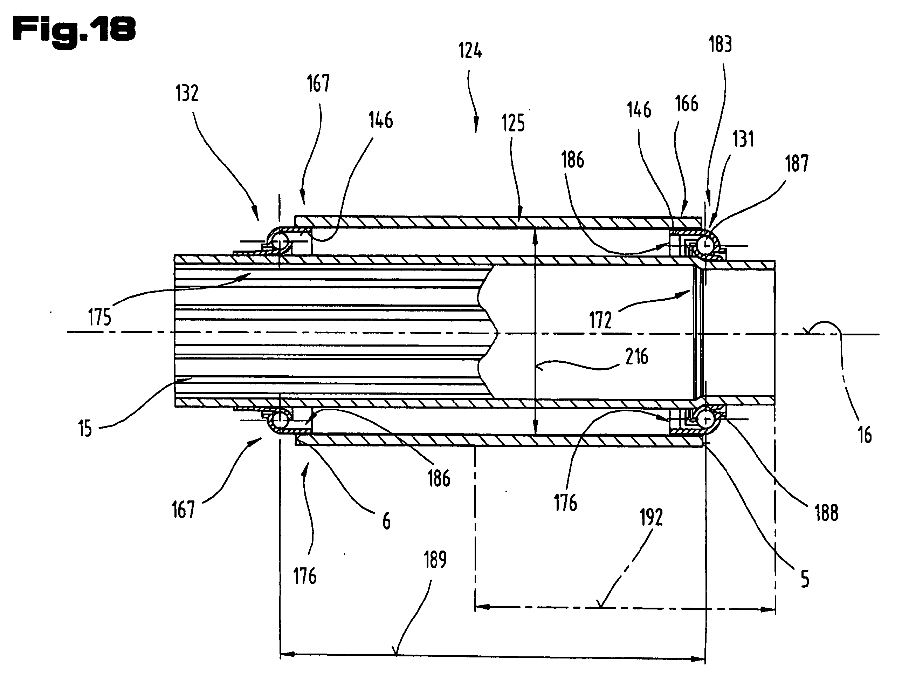

In den gemeinsam beschriebenen Fig. 17 und 18 sind andere Ausführungsvarianten eines Lagerungskastens 124 mit dem einen kreiszylindrischen Querschnitt aufweisenden Mantelrohr 125 im Längsschnitt gezeigt. Das zweckmäßig einteilige Mantelrohr 125 ist im Längsverlauf beispielsweise an dessen gegenüberliegenden distalen Endbereichen 131, 132 mit den Aufnahmebereichen 176 ausgestattet, denen unmittelbar die schalenförmigen Lagerteile 183 bzw. die diese bildenden Außenringe 187 zugeordnet sind. Die an einer den Aufnahmebereich 176 bildenden Außenfläche auf das Mantelrohr 125 aufgesetzten und positionierten Außenringe 187 der Lagerelemente 166, 167 werden form- und/oder kraftschlüssig, insbesondere kraftschlüssig, unmittelbar mit dem Mantelrohr 125 bewegungsfest verbunden. Natürlich besteht auch die Möglichkeit, um Fertigungstoleranzen des Mantelrohres 125 auszugleichen, die Aufnahmebereiche 176 beispielsweise über zerspannende Bearbeitungsverfahren gegebenenfalls nachzubearbeiten. Die Ausbildung und Anordnung der Lagerelemente 166, 167 sowie das Einstellen des Einbaumaßes 192 und des Längsabstandes 189 kann den zuvor ausführlich beschriebenen Figuren entnommen werden.

In der Fig. 18 sind die durch voneinander getrennte Teilbereiche an einer Innenfläche bzw. Innenseite des Mantelrohres 125 gebildeten Aufnahmebereiche 176 gezeigt. Die in das Mantelrohr 125 eingesetzten und positionierten Außenringe 187 der Lagerelemente 166, 167 werden form- und/oder kraftschlüssig, insbesondere kraftschlüssig, unmittelbar mit dem Mantelrohr 125 bewegungsfest verbunden. Die den Aufnahmebereichen 176 zugeordneten Außenringe 187 weisen ebenfalls in Richtung ihrer Lagerteilbreite 194, ausgehend von dem Aufnahmebereich 176 in Richtung des stirnseitigen Endes der Lenkwelle 15 den Ansatzteil 201, den Führungsteil 202 und den Verstellbereich 203 auf (siehe Fig. 16). Der Ansatzteil 201 des Außenringes 187 wird zumindest mit einem Teil der Breite 209 des Aufnahmebereiches 176 überlappt und in den dadurch gebildeten Überlappungsbereich 186 mit dem Mantelrohr 125 form- und/oder kraftschlüssig verbunden. Eine Innenabmessung 216, insbesondere ein Durchmesser, ist zumindest um die Wandstärken 207 zuzüglich dem Innendurchmesser 208 des Außenringes 187 größer ausgebildet, sodaß zumindest ein Teil des Lagerelementes 166, 167 in das Mantelrohr 125 eingesetzt ist (siehe ebenfalls Fig. 16).

Eine andere, nicht weiters dargestellte Ausführung besteht darin, daß der Außenring 187 über die Lagerteilbreite 194, ausgehend von dem Ansatzteil 201, in Richtung des Führungsteiles 202 radial aufgeweitet ist und der Innendurchmesser 208 im Bereich des Ansatzteiles 201 kleiner ausgebildet ist, als der Innendurchmesser 208 im Bereich des Führungsteiles 202. Der zwischen dem Ansatzteil 201 und dem Führungsteil 202 angeordnete Verstellbereich 203 weist die gleichen Abmessungen wie der Ansatzteil 201 auf.

Natürlich kann eine derartige Ausführung der Anordnung der Lagerelemente 166, 167 auch bei Anordnung der Lageraufnahmestelle 177 angewendet werden, indem der Außenring 187 in die Lageraufnahmestelle 177 eingesetzt wird.

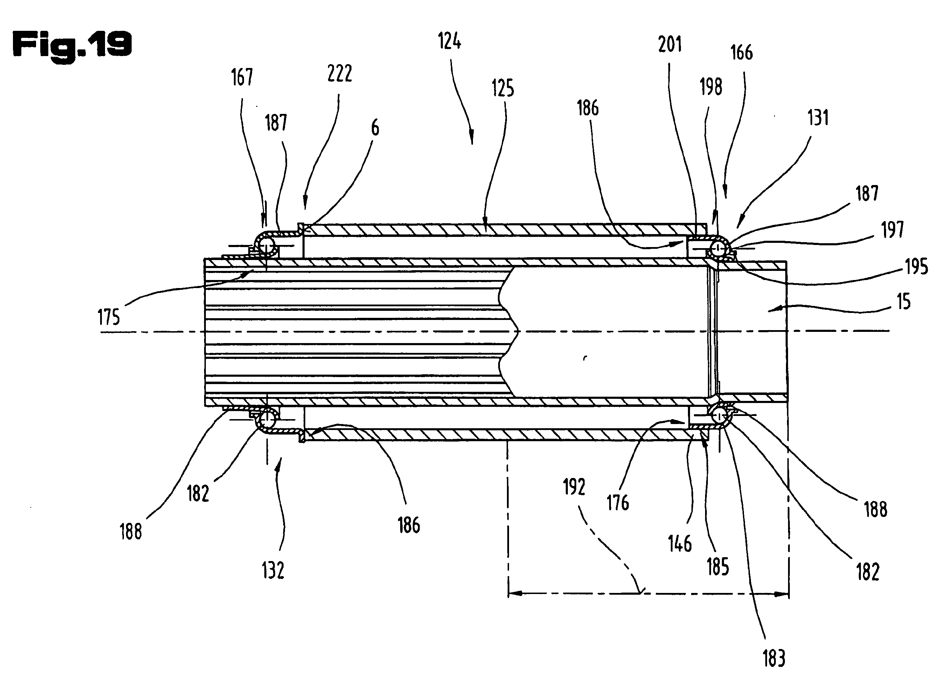

In der Fig. 19 ist eine weitere Ausführungsvariante eines Lagerungskastens 124 mit einer weiteren Ausführung einer Lageraufnahmestelle 222 dargestellt. Zumindest eine Lageraufnahmestelle 222 ist an einem der gegenüberliegenden, den Aufnahmebereich 176 bildenden Stirnseiten 5; 6 angeordnet, in welchem der Lagerteil 183 bzw. Außenring 187 mit dem Mantelrohr 125 über ein form- und/oder kraftschlüssiges, insbesondere kraftschlüssiges, Verbindungselement 185 verbunden wird. Die Lageraufnahmestelle 222 ist in etwa topfförmig ausgebildet und mit der Materialdurchtrennung 195 versehen. Zwischen dem verbleibenden Randsteg 197 und den die Lageraufnahmestelle 222 bildenden Hohlzylindermantel 198 ist der Führungsteil 201 für die Zwischenteile 182 ausgebildet. Der Innenring 188 überragt in Richtung des stirnseitigen Endes der Lenkwelle 15 den Außenring 187 und wird ebenfalls über das Verbindungselement 185 mit der Lenkwelle 15 form- und/oder kraftschlüssig verbunden.

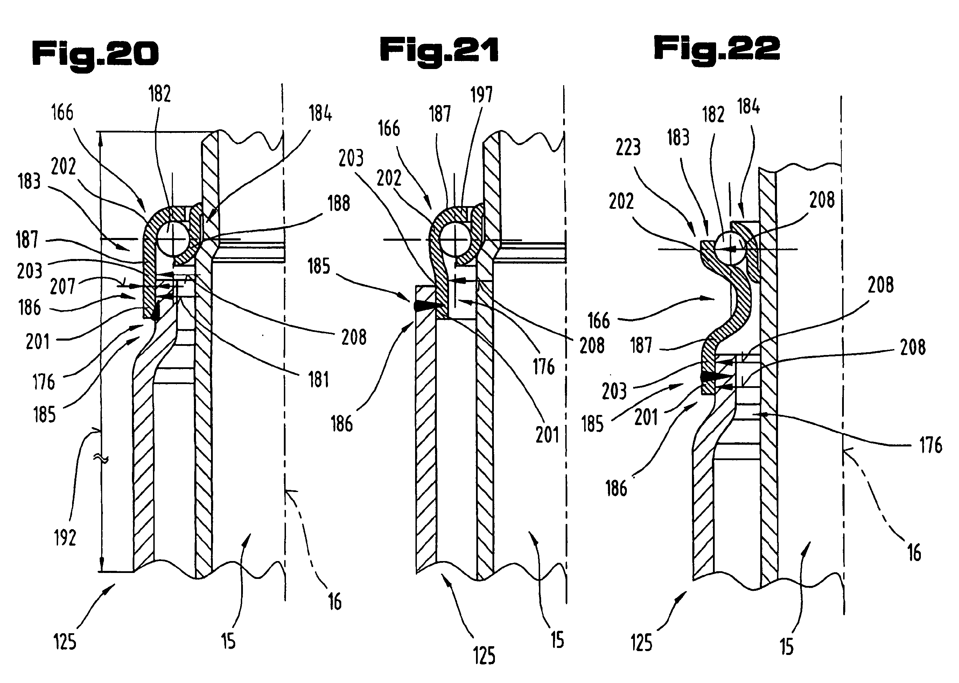

In den gemeinsam beschriebenen Fig. 20 bis 27 sind weitere Ausführungs varianten für den Aufnahmebereich 176 am Mantelrohr 125 und für das Lagerelement 166; 167 in stark vereinfachter, schematischer Darstellung gezeigt. Fig. 20 zeigt den dem Aufnahmebereich 176 zugeordneten Lagerteil 183, der topfartig ausgebildet ist, und den dem Aufnahmebereich 176 zugeordneten Ansatzteil 201, den diesem gegenüberliegenden Führungsteil 202 und den zwischen diesem angeordneten Verstellbereich 203, wovon jeder gleiche Innendurchmesser 208 ausbildet. Der Aufnahmebereich 176 ist bevorzugt kreiszylindrisch ausgebildet. Der Außenring 187 wird nach dem Verstellen auf bzw. gegenüber dem Mantelrohr 125 und Erreichen eines vorbestimmbaren Einbaumaßes 192 über das Verbindungselement 185, das im vorliegenden Ausführungsbeispiel durch eine Kehlnaht gebildet ist, unlösbar mit dem Mantelrohr 125 bzw. mit dem Aufnahmebereich 176 verbunden. Natürlich besteht auch die Möglichkeit, daß einer der Teile, insbesondere der Außenring 187, im Überlappungsbereich 186 durchgeschweißt wird. Wie in diesem Ausführungsbeispiel gezeigt, ist das Mantelrohr 125 im Aufnahmebereich 176 in seinem Außendurchmesser 181 zumindest um die Wandstärke 207 des Außenringes 287 kleiner bemessen, wonach das Mantelrohr 125 in seinen Außenabmessungen am Lagerelement 166 nicht überragt ist.

In der Fig. 21 ist das Mantelrohr 125 gezeigt, welches an seiner Innenseite den Aufnahmebereich 176 ausbildet. Diese Ausführung eignet sich besonders gut für das Durchschweißen des Mantelrohres 125 im Überlappungsbereich 186. Der Lagerteil 183 weist in seiner Längserstreckung unterschiedliche Innendurchmesser 208 auf, wobei der Innendurchmesser 208 des Ansatzteiles 201 und des Verstellbereiches 203 gleich ausgebildet sind und der Innendurchmesser 208 im Bereich des Führungsteiles 202, ausgehend vom Ansatzteil 201, in Richtung des Führungsteiles 202 aufweitend verläuft. Im Anschluß daran ist der einen Bereich des Führungsteiles 202 ausbildende, sich in Richtung der Lenkwelle 15 erstreckende Randsteg 197 ausgebildet.

Fig. 22 zeigt eine weitere Ausführungsvariante des an der Außenseite des Mantelrohres 125 bzw. Aufnahmebereiches 176 angeordneten Lagerteiles 183, wobei die Innendurchmesser 208 des Ansatzteiles 201 und des Verstellbereiches 203 gleich bemessen sind. Im weiteren Längsverlauf des Lagerteiles 183 verjüngt sich der Innendurchmesser 208, wonach Teilbereiche des Führungsteiles 202 zylindrisch und anschließend daran aufweitend verlaufen. Der Innendurchmesser 208 einer Führungsteilanlagefläche 223 im Bereich des Zwischenteiles 182 ist zweckmäßig wiederum gleich bemessen wie ein Innendurchmesser 208 des Ansatzteiles 201 und des Verstellbereiches 203. Der Lagerteil 183 weist zwischen dem Verstellbereich 203 und dem Führungsteil 202 einen gekrümmten, der Lenkwelle 15 zugewandt einen konkaven Verlauf auf. Das Lagerelement 166; 167 ist in axialer Richtung der Lenkwelle 15 über nicht weiters dargestellte Sicherungselemente, wie beispielsweise Spannelemente, an der Lenkwelle 15 oder zusätzlich durch auf der Lenkwelle 15 aufzubringende form- und/oder kraftschlüssige Bauelemente gesichert. Zweckmäßig ist eine Außenabmessung des Lagerelementes 166; 167 durch die Außenabmessung des Mantelrohres 125 begrenzt.

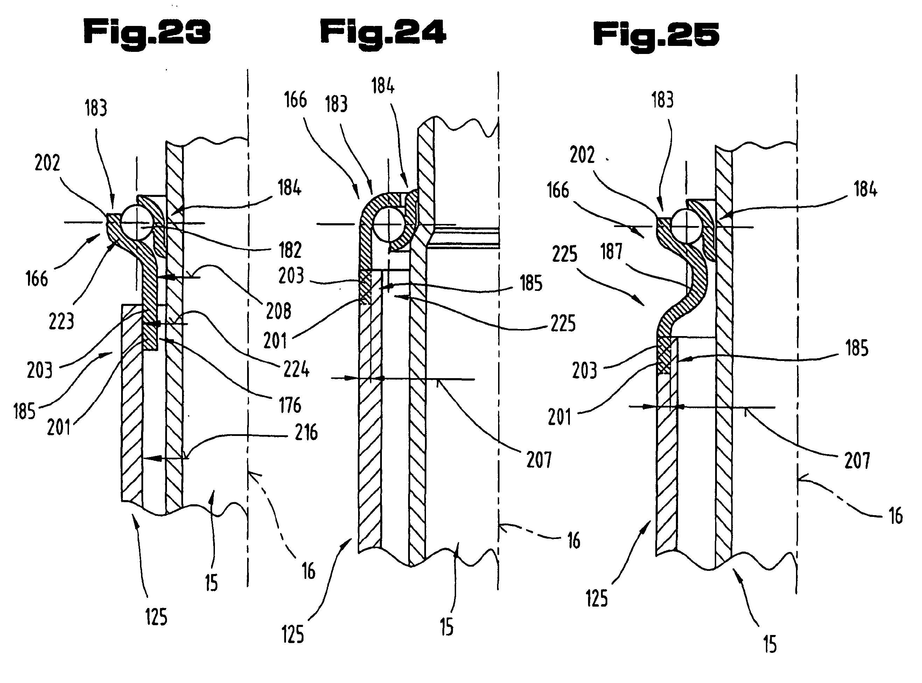

In der Fig. 23 ist eine weitere Ausführungsvariante einer Ausbildung des Lagerteiles 166; 167 gezeigt, welcher an der Innenseite des Mantelrohres 125 angeordnet ist. Der Lagerteil 166; 167 ist in Richtung seiner Längserstreckung im Bereich des Ansatzteiles 201 und Verstellbereiches 203 zylindrisch ausgebildet und weist eine Außenabmessung 224, zweckmäßig einen Durchmesser, auf, die zumindest geringfügig kleiner bemessen ist als eine Innenabmessung 216 des Mantelrohres 125. Der dem Ansatzteil 201 gegenüberliegende und in Richtung der Längserstreckung des Lagerteiles 183; 184 aufweitend verlaufende Führungsteil 202 bildet die Führungsteilanlagefläche 223 für den Zwischenteil 182 aus.

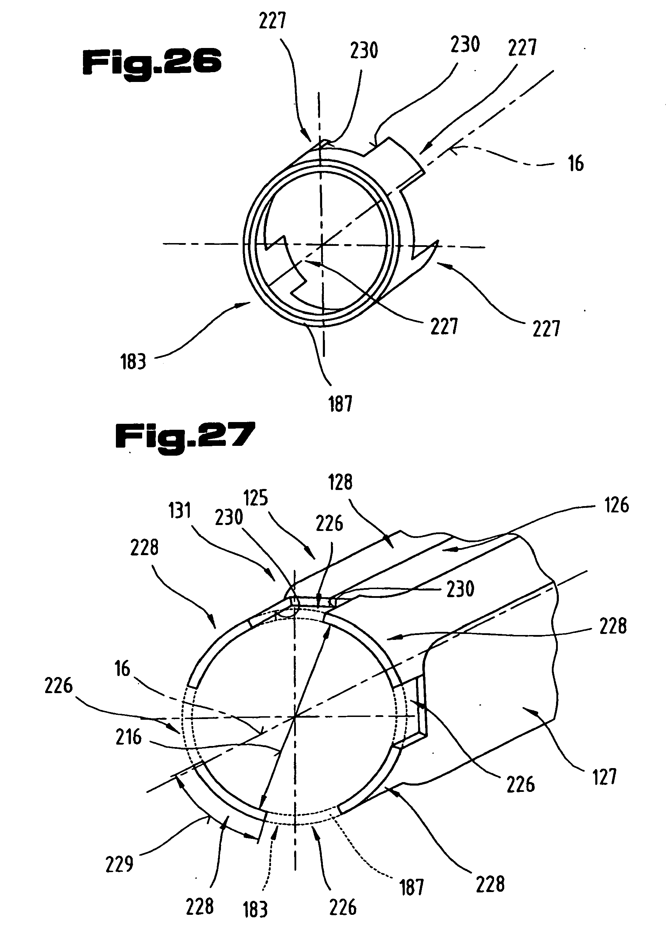

Wie aus den Fig. 26 und 27 besser zu ersehen ist, sind weitere Ausführungsvarianten für die Ausbildung des Lagerteiles 183; 184 und des Aufnahmebereiches 176 am Mantelrohr 125 dargestellt. Das Mantelrohr 125 weist bevorzugt in einem seiner Endbereiche 131; 132 den Aufnahmebereich 225, der einstückig am Mantelrohr 125 angeformt ist, auf. Das einteilig oder mehrteilig ausgebildete Mantelrohr 125 kann einen kreisrunden und/oder mehreckigen Querschnitt aufweisen. Wie im bevorzugten Ausführungsbeispiel gezeigt, ist das Mantelrohr 125 mehreckig ausgebildet und der Aufnahmebereich 225 durch mehrere sich diametral gegenüberliegende und voneinander durch Aufnahmekammern 226 für mit korrespondierenden Vorsprüngen 227 versehene Lagerteile 183; 184 getrennte Aufnahmesegmente 228 gebildet. Die Aufnahmesegmente 228 besitzen bevorzugt die gleiche Wandstärke, wie die das Mantelrohr 125 bildenden Teile 127, 128. Die Innenabmessung 216, insbesondere der Durchmesser, des Lagerteiles 166; 167 begrenzt die Krümmungsradien der umzuformenden, etwa kreisbogenförmigen Aufnahmesegmente 228. Zwischen den eine Kreisbogenlänge 229 aufweisenden Aufnahmesegmenten 228 ragen die in Längsrichtung des Mantelrohres 125 verlaufenden schlitzförmigen Aufnahmekammern 226 zumindest über einen Teil einer Länge der Aufnahmesegmente 228 vor, wobei einander zugewandte Längsseitenflächen 230 der radial voneinander distanzierten Aufnahmesegmente 228 als Verbindungsflächen für den in die Aufnahmekammer226 vorragenden Vorsprung 227 des Lagerteiles 183 ausgebildet sind. Gegebenenfalls kann auch die sich zwischen den gegenüberliegenden Längsseitenflächen 230 erstreckende Seitenfläche als Verbindungsfläche ausgebildet sein.

In der Fig. 26 ist der Lagerteil 183 näher dargestellt. Die mit den Aufünahmekanunern 226 des Aufnahmebereiches 225 korrespondierenden Vorsprünge 227 des Lagerteiles 166; 167 weisen den dem Mantelrohr 125 zugewandten Ansatzteil 201 und den Verstellbereich 203 auf, an den der radial umlaufende, den Randsteg 218 ausbildende Führungsteil 202 anschließt. Zweckmäßig ist eine parallel zur Längsachse 16 der Lenkwelle 15 parallel bemessene Länge der Aufnahmekammern 226 größer ausgebildet als eine Länge der Vorsprünge 227 des Lagerteiles 183; 184. Zweckmäßig ist zumindest eine der Wandstärken der Aufnahmesegmente 228 oder des Lagerteiles 183; 184 kleiner bemessen. Selbstverständlich ist es aber auch möglich, beide Wandstärken 207 mit gleichen Abmessungen bzw. Wandstärken auszubilden.

Zumindest einer der zwischen den Aufnahmesegmenten 228 verdrehgesichert aufgenommenen Lagerteile 183; 184 ist gegenüber dem Mantelrohr 125 relativ verstellbar ausgebildet, um das Einbaumaß 192 einzustellen bzw. einzuhalten. Nach Positionierung des Lagerteiles 183; 184 gegenüber dem Mantelrohr 125 oder des Mantelrohres 125 gegenüber dem Lagerteil 183; 184 werden diese in den durch Längsseitenflächen 230 der Vorsprünge 227 und den Längsseitenflächen 230 der Aufnahmesegmente 228 gebildeten linienförmigen Überlappungsbereichen über das Verbindungselement 185 miteinander unlösbar verbunden. Die Außendurchmesser 181, 224 der Aufnahmebereiche 225, insbesondere der Aufnahmesegmente 228, und des Lagerteiles 183; 184 verlaufen fluchtend zueinander. Die stumpf aneinandergelegten, die Verbindungsflächen bildenden Längsseitenflächen 229, 230 der Aufnahmesegmente 228 und Vorsprünge 227 werden zweckmäßig über eine Kehlnaht miteinander verbunden.

Zweckmäßig liegt der Verbindungsbereich 126 zwischen den beiden gegenüberliegenden Teilen 127, 128 des Mantelrohres 125 und zwischen den gegenüberliegenden und jeweils von den Teilen 127, 128 ausgebildeten Aufnahmesegmenten 228. Die Teile 127, I28 sind zweckmäßig symmetrisch ausgebildet. Die vertikale Längsmittelebene verläuft bevorzugt deckungsgleich mit der zwischen den Verbindungsbereichen 126 gebildeten Ebene.

Unabhängig von den zuvor beschriebenen Fig. sei abschließend darauf hingewiesen, daß die Abmessungen, wie beispielsweise der Innendurchmesser 208 oder die Außenabmessung 224 des Lagerteiles 183 und die Abmessungen, wie beispielsweise der Innenabmessung oder Au-ßendurchmesser 216; 181, des Aufnahmebereiches 133; 134; I76; 225 derart bemessen sind, daß der Lagerteil 183 bei der Montage entgegen der Wirkung einer zwischen dem Lagerteil 183 und Aufnahmebereich 133; 134; 176; 225 wirkenden Reibkraft aufgeschoben wird.

Natürlich sind die in den Figuren gezeigten unterschiedlichen Ausführungen der Lagerteile 183 bzw. des Außenringes 187 an dem Lagerungskasten I24 beliebig untereinander kombinierbar.

Der Ordnung halber sei abschließend darauf hingewiesen, daß zum besseren Verständnis das erfindungsgemäße Mantelrohr 1; 125 und der Lagerungskasten 124 bzw. deren Bestandteile teilweise unmaßstäblich und/oder vergrößert und/oder verkleinert dargestellt wurden.

### Bezugszeichenaufstellung

- 1: Mantelrohr
- 2: Ausnehmung
- 3: Teil
- 4: Teil
- 5: Stirnfläche

- 6: Stirnfläche
- 7: Lageraufuahmestelle
- 8: Lageraufnahmestelle
- 9: Lager
- 10: Lager

- 11: Innendurchmesser
- 12: Außendurchmesser
- 13: Breite
- 14: Außenring
- 15: Lenkwelle

- 16: Längsmittelachse
- 17: Oberfläche
- 18: Bohrung
- 19: Bohrung
- 20: Verstärkungsleiste

- 21: Basis
- 22: Höhe
- 23: Höhe
- 24: Stirnfläche
- 25: Stirnfläche

- 26: Teilungsebene
- 27: Symmetrieachse
- 28: Wandstärke
- 29: Wandstärke
- 30: Querschnitt

- 31: Oberkante
- 32: Breitenmaß
- 33: Außenmaß
- 34: Seitenschenkel
- 35: Winkel

- 36: Zwischenteil
- 37: Außenmaß
- 38: Endteil
- 39: Hohlkehle
- 40: Außenseite

- 41: Innenseite
- 42: Querschnitt
- 43: Seitenschenkel
- 44: Außenmaß
- 45: Länge

- 46: Breite
- 47: Stärke
- 48: Breite
- 49: Länge
- 50: Ausnehmung

- 51: Breite
- 52: Länge
- 53: Seitenfläche
- 54: Winkel
- 55: Stirnfläche

- 56: Stirnfläche
- 57: Abstand
- 58: Lasche
- 59: Bohrung
- 60: Durchmesser

- 61: Dämpfungsorgan
- 62: Außenmaß
- 63: Zwischenteil
- 64: Endteil
- 65: Querschnitt

- 66: Breitenmaß
- 67: Seitenschenkel
- 68: Endteil
- 69: Basis
- 70: Seitenschenkel

- 71: Anfangsteil
- 72: Zwischenteil
- 73: Endteil
- 74:
- 75:

- 76:
- 77:
- 78:
- 79:
- 80:

- 81:
- 82:
- 83:
- 84:
- 85:

- 86:
- 87:
- 88:
- 89:
- 90:

- 91:
- 92:
- 93:
- 94:
- 95:

- 96:
- 97:
- 98:
- 99:
- 100:

- 101:
- 102:
- 103:
- 104:
- 105:

- 106:
- 107:
- 108:

- 109:
- 110:

- 111:
- 112:
- 113:
- 114:
- 115:

- 116:
- 117:
- 118:
- 119:
- 120: Hülse

- 121: Schlitz
- 122: Bohrung
- 123: Schlangenfeder
- 124: Lagerungskasten
- 125: Mantelrohr

- 126: Verbindungsbereich
- 127: Teil
- 128: Teil
- 129: Längsstirnfläche
- 130: Längsstirnfläche

- 131: Endbereich
- 132: Endbereich
- 133: Aufnahmebereich
- 134: Aufnahmebereich
- 135: Lageraufnahmestelle

- 136: Lageraufnahmestelle
- 137: Lagerteil
- 138: Materialrücksetzung
- 139: Ausnehmung
- 140: Seitenschenkel

- 141: Versteifungsbereich
- 142: Befestigungslasche
- 143: Tragarm
- 144: Schenkel
- 145: Tragarmteil

- 146: Breitenmaß
- 147: Ausnehmung
- 148: Zuschnitt- und/oder Stanz- und/oder Biegeteil
- 149: Biegelinie
- 150: Übergangsbereich

- 151: Versteifungselement
- 152: Verbindungselement
- 153: Basis
- 154: Scheitel
- 155: Höhe

- 156: Winkel
- 157: Winkel
- 158: Symmetrieachse
- 159: Zwischenteil
- 160: Endteil

- 161: Wandstärke
- 162: Tragplatte
- 163:
- 164:
- 165:

- 166: Lagerelement
- 167: Lagerelement
- 168: Lenkwellenabschnitt
- 169: Lenkwellenabschnitt
- 170: Außendurchmesser

- 171: Innendurchmesser
- 172: Lagerstelle
- 173: Schulter
- 174: Außenabmessung
- 175: Lagerstelle

- 176: Aufnahmebereich
- 177: Lageraufnahmestelle
- 178: Zwischenbereich
- 179: Schlitz
- 180: Aufnahmesegment

- 181: Außendurchmesser
- 182: Zwischenteil
- 183: Lagerteil (Außenring)
- 184: Lagerteil (Innenring)
- 185: Verbindungselement

- 186: Überlappungsbereich
- 187: Außenring
- 188: Innenring
- 189: Längsabstand
- 190: Punkt

- 191: Meßmarke
- 192: Einbaumaß
- 193:
- 194: Lagerteilbreite
- 195: Materialdurchtrennung

- 196: Bodenplatte
- 197: Randsteg
- 198: Hohlzylindermantel
- 199: Durchmesser
- 200: Biegeradius

- 201: Ansatzteil
- 202: Führungsteil
- 203: Verstellbereich
- 204: Breite
- 205: Breite

- 206: Breite
- 207: Wandstärke
- 208: Innendurchmesser
- 209: Breite
- 210: Breite

- 211: Ansatzteil
- 212: Breite
- 213: Verstellbereich
- 214: Vorsprung
- 215: Eckbereich

- 216: Innenabmessung
- 217: Materialdurchtrennung
- 218: Randsteg
- 219: Hohlzylindermantel
- 220: Führungsteil

- 221: Radius
- 222: Lageraufnahmestelle
- 223: Führungsteilanlagefläche
- 224: Außenabmessung
- 225: Aufnahmebereich

- 226: Aufnahmekammer
- 227: Vorsprung
- 228: Aufnahmesegment
- 229: Kreisbogenlänge
- 230: Längsseitenfläche

## Patentansprüche

1. Mehrteiliges Mantelrohr (1) mit einem oberen Teil (3) und einem unteren Teil (4), von welchen der obere Teil (3) in einer zu seiner Längserstreckung senkrechten Ebene einen in etwa U-förmigen oder trapezförmigen Querschnitt mit zwei aufragenden Seitenschenkeln (34; 67) aufweist, wobei die Seitenschenkeln (34; 67) jeweils eine Stirnfläche (24) ausbilden und der untere Teil (4) an die Stirnflächen (24) gelegt sowie über zumindest ein Verbindungselement mit dem oberen Teil (3) verbunden ist und an den beiden gegenüberliegenden, voneinander abgewendeten Stirnflächen (5, 6) des oberen und/oder unteren Teils (3, 4) Lageraufnahmestellen (7, 8) angeordnet sind, die durch einen fugenlosen, geschlossenen Ring gebildet sind, **dadurch gekennzeichnet, daß** auch der untere Teil (4) in einer zur Längserstreckung des Mantelrohrs (1) senkrechten Ebene einen in etwa U-förmigen oder trapezförmigen Querschnitt mit zwei aufragenden Seitenschenkeln (43; 70) mit jeweils einer Stirnfläche (25) aufweist, wobei der obere und untere Teil (3, 4) an den Stirnflächen (24, 25) über das zumindest eine Verbindungselement miteinander verbunden sind und daß die Lageraufnahmestellen (7, 8) unter Zwischenschaltung jeweils einer diese aufnehmenden Tragplatte mit den Stirnflächen (5, 6) des Mantelrohrs (1) verbunden sind.

2. Mehrteiliges Mantelrohr nach Anspruch 1, **dadurch gekennzeichnet, daß** das Verbindungselement zwischen den beiden Teilen (3, 4) zumindest durch eine Schweißnaht, bevorzugt durch zumindest eine Laser- oder Plasmaschweißnaht, gebildet ist.

3. Mehrteiliges Mantelrohr nach Anspruch 1, **dadurch gekennzeichnet, daß** das Verbindungselement zwischen den beiden Teilen (3, 4) durch eine Kleberschicht gebildet ist.

4. Mehrteiliges Mantelrohr nach Anspruch 1, **dadurch gekennzeichnet, daß** das Verbindungselement zwischen den beiden Teilen (3, 4) durch eine Lötverbindung gebildet ist.

5. Mehrteiliges Mantelrohr nach Anspruch 2, **dadurch gekennzeichnet, daß** die Schweißnaht zwischen dem oberen Teil (3) und unteren Teil (4) durch eine Kehlnaht (39) gebildet ist.

6. Mehrteiliges Mantelrohr nach Anspruch 1, **dadurch gekennzeichnet, daß** die Wandstärke (28, 29) des oberen Teils (3) oder unteren Teils (4) größer ist als eine Wandstärke (29, 28) des unteren Teils (4) oder oberen Teils (3).

7. Mehrteiliges Mantelrohr nach Anspruch 1 oder 6, **dadurch gekennzeichnet, daß** Innenseiten (41) des oberen Teils (3) und unteren Teils (4) fluchtend angeordnet sind.

8. Mehrteiliges Mantelrohr nach Anspruch 1 oder 6, **dadurch gekennzeichnet, daß** Außenseiten (40) des oberen Teils (3) und unteren Teils (4) zueinander fluchtend angeordnet sind.

9. Mehrteiliges Mantelrohr nach Anspruch 1, **dadurch gekennzeichnet, daß** der obere Teil (3) und/oder untere Teil (4) aus einem ebenflächigen Zuschnitt durch Abkantung hergestellt ist/sind.

10. Mehrteiliges Mantelrohr nach einem der Ansprüche 6 bis 8, **dadurch gekennzeichnet, daß** ein Außenmaß (33) des oberen Teils (3) und ein Außenmaß (44) des unteren Teils (4) im Bereich der einander zugewandten Stirnflächen (24, 25) unterschiedlich sind.

11. Mehrteiliges Mantelrohr nach einem der Ansprüche 6 bis 8, **dadurch gekennzeichnet, daß** ein Außenmaß (33) des oberen Teils (3) und ein Außenmaß (44) des unteren Teils (4) im Bereich der einander zugewandten Stirnflächen (24, 25) gleiche Abmessungen aufweisen.

12. Mehrteiliges Mantelrohr nach Anspruch 10 oder 11, **dadurch gekennzeichnet, daß** eine Differenz zwischen den Außenmaßen (33, 44) des oberen Teils (3) und unteren Teils (4) größer ist als die Hälfte der Wandstärke (28, 29).

13. Mehrteiliges Mantelrohr nach Anspruch 1, **dadurch gekennzeichnet, daß** der obere Teil (3) und/oder untere Teil (4) im Bereich der Seitenschenkel (34) mit in Richtung einer Symmetrieachse (27) versetzten streifenförmigen Endteilen (38) versehen ist/sind.

14. Mehrteiliges Mantelrohr nach Anspruch 13, **dadurch gekennzeichnet, daß** ein Außenmaß (33) des oberen Teils (3) zwischen den Endteilen (38) größer ist als ein Breitenmaß (32) an der Basis (21).

15. Mehrteiliges Mantelrohr nach Anspruch 13 oder 14, **dadurch gekennzeichnet, daß** die streifenförmigen Endteile (38) über zumindest schräg und/oder parallel zur Symmetrieachse (27) verlaufende Schenkelteile mit Zwischenteilen (36) verbunden sind.

16. Mehrteiliges Mantelrohr nach Anspruch 1, **dadurch gekennzeichnet, daß** eine Höhe (22, 23) des oberen bzw. unteren Teils (3, 4) größer ist als die Höhe (23, 22) des unteren bzw. oberen Teils (3, 4).

17. Mehrteiliges Mantelrohr nach Anspruch 1, **dadurch gekennzeichnet, daß** in einer Basis (21) des oberen Teils (3) und/oder in einer Basis (69) des unteren Teils (4) eine in Längsrichtung derselben sich erstreckende langlochförmige Ausnehmung (2) für die Aufnahme und Führung einer Verstelleinrichtung angeordnet ist.

18. Mehrteiliges Mantelrohr nach Anspruch 1 oder 17, **dadurch gekennzeichnet, daß** zwischen den beiden Seitenschenkeln (34, 43) an der Basis (21, 69) eine Verstärkungsleiste (20) angeordnet, bevorzugt mit der Basis (21, 69) verbunden ist.

19. Mehrteiliges Mantelrohr nach Anspruch 18, **dadurch gekennzeichnet, daß** in der Verstärkungsleiste (20) eine Ausnehmung (50) angeordnet ist, die eine gleiche oder größere Länge (52) und Breite (51) aufweist als die Ausnehmung (2) in der Basis (21, 69) des oberen Teils (3) und/oder unteren Teils (4).

20. Mehrteiliges Mantelrohr nach Anspruch 1, **dadurch gekennzeichnet, daß** das Verbindungselement zwischen der Lageraufnahmestelle (7, 8) an dem Mantelrohr (1) bzw. dem oberen Teil (3) und/oder unteren Teil (4) durch zumindest eine Schweißnaht, bevorzugt durch zumindest eine Laser- oder PlasmaschweiBnaht, gebildet ist.

21. Mehrteiliges Mantelrohr nach Anspruch 1, **dadurch gekennzeichnet, daß** das Verbindungselement zwischen der Lageraufnahmestelle (7, 8) an dem Mantelrohr (1) bzw. dem oberen Teil (3) und/oder unteren Teil (4) durch bevorzugt zumindest eine Kleberschichte gebildet ist.

22. Mehrteiliges Mantelrohr nach Anspruch 1, **dadurch gekennzeichnet, daß** das Verbindungselement zwischen der Lageraufnahmestelle (7, 8) an dem Mantelrohr (1) bzw. dem oberen Teil (3) und/oder unteren Teil (4) durch eine Lötverbindung gebildet ist.

23. Mehrteiliges Mantelrohr nach Anspruch 18 oder 19, **dadurch gekennzeichnet, daß** die Verstärkungsleiste (20) über eine Schweißnaht mit einem der Teile (3, 4) verbunden, insbesondere von außen durchgeschweißt ist.

24. Mehrteiliges Mantelrohr nach Anspruch 18 oder 19, **dadurch gekennzeichnet, daß** die Verstärkungsleiste (20) über eine Lötverbindung mit einem der Teile (3, 4) verbunden ist.

25. Mehrteiliges Mantelrohr (125) mit einem ersten Teil (127) und einem weiteren Teil (128), von welchen zumindest ein Teil (127, 128) in einer zu seiner Längserstreckung senkrechten Ebene einen mehreckigen, insbesondere einen U-förmigen, Querschnitt aufweist, wobei an den beiden gegenüberliegenden, voneinander abgewandten Endbereichen (131, 132) des ersten und/oder weiteren Teils (127, 128) Aufnahmebereiche (133, 134; 176; 225) für Lagerelemente (166, 167) angeordnet sind, **dadurch gekennzeichnet, daß** die Teile (127, 128) jeweils halbschalenförmig ausgebildet und in einem in einer zur senkrechten Längsmittelebene parallelen Ebene liegenden Verbindungsbereich (126) über zumindest ein Verbindungselement (185) miteinander verbunden sind und daß die Aufnahmebereiche (133, 134; 176; 225) für die Lagerelemente (166, 167) durch jeweils an den Teilen (127, 128) einstückig angeformte etwa schalenförmige Lagerteile (137) gebildet sind.

26. Mehrteiliges Mantelrohr nach Anspruch 25, **dadurch gekennzeichnet, daß** die Teile (127, 128) symmetrisch ausgebildet sind und die Ebene des Verbindungsbereiches (126) zu der Längsmittelebene des Mantelrohrs (125) deckungsgleich verläuft.

27. Mehrteiliges Mantelrohr nach Anspruch 25, **dadurch gekennzeichnet, daß** der Aufnahmebereich (225) durch mehrere diametral gegenüberliegende kreisbogenförmige Aufnahmesegmente (228) mit diese voneinander trennende Aufnahmekammern (226) für das zumindest bereichsweise Aufnehmen von Vorsprüngen (227) eines Lagerelementes (166, 167) gebildet ist.

28. Mehrteiliges Mantelrohr nach Anspruch 27, **dadurch gekennzeichnet, daß** jeder der Teile (127, 128) mehrere voneinander getrennte Aufnahmesegmente (228) aufweist.

29. Mehrteiliges Mantelrohr nach Anspruch 25, **dadurch gekennzeichnet, daß** die Aufnahmebereiche (176) durch konzentrisch um eine Längsmittelachse (16) einer Lenkwelle (15) umlaufende und durch diametral gegenüberliegende Schlitze (179) voneinander getrennte, kreisbogenförmige Aufnahmesegmente (180) gebildet sind.

30. Mehrteiliges Mantelrohr nach Anspruch 25, **dadurch gekennzeichnet, daß** an gegenüberliegenden Endbereichen (131, 132) am Mantelrohr (125) eine Inrienseite oder Außenseite oder Stirnfläche (5, 6) als Aufnahmebereich (133, 134; 176) für die Lagerelemente (166, 167) vorgesehen ist.

31. Mehrteiliges Mantelrohr nach Anspruch 25, **dadurch gekennzeichnet, daß** das Verbindungselement zwischen den beiden Teilen (127, 128) zumindest durch eine Schweißnaht, bevorzugt durch zumindest eine Laser- oder Plasmaschweißnaht, gebildet ist.

32. Mehrteiliges Mantelrohr nach Anspruch 25, **dadurch gekennzeichnet, daß** am Mantelrohr (125) ein rahmenartiger Tragarm (143) zur verschwenkbeweglichen Befestigung an einer Karosserie angeordnet ist.

33. Mehrteiliges Mantelrohr nach Anspruch 32, **dadurch gekennzeichnet, daß** der Tragarm (143) am ersten und/oder weiteren Teil (127, 128) einstückig angeformt oder über ein Verbindungselement (152) mit dem ersten und/oder weiteren Teil (127, 128) verbunden ist.

## Claims

1. Multi-part steering column tube (1) with a top part (3) and a bottom part (4), of which the top part (3) has an approximately U-shaped or trapezoid-shaped cross section with two projecting side legs (34; 67) in a plane perpendicular to its longitudinal extension, which side legs (34; 67) respectively form an end face (24) and the bottom part (4) is placed on the end faces (24) and is connected to the top part (3) by means of at least one joining element, and bearing receiving points (7, 8) are provided on the oppositely lying end faces (5, 6) of the top and/or bottom part (3, 4) directed away from one another, formed by a seamless, closed ring, **characterised in that** the bottom part (4) also has an approximately U-shaped or trapezoid-shaped cross section with two projecting legs (43; 70) in a plane perpendicular to the longitudinal extension of the steering column tube (1), each with an end face (25), and the bottom and top part (3, 4) are connected to one another at the end faces (24, 25) by means of at least one joining element and the bearing receiving points (7, 8) are respectively connected to the end faces (5, 6) of the steering column tube (1), each with a support plate to receive them disposed in between.

2. Multi-part steering column tube as claimed in claim 1, **characterised in that** the joining element between the two parts (3, 4) is provided at least in the form of a weld seam, preferably at least a laser or plasma welded seam.

3. Multi-part steering column tube as claimed in claim 1, **characterised in that** the joining element between the two parts (3, 4) is an adhesive layer.

4. Multi-part steering column tube as claimed in claim 1, **characterised in that** the joining element between the two parts (3, 4) is a soldered joint.

5. Multi-part steering column tube as claimed in claim 2, **characterised in that** the joining element between the top part (3) and bottom part (4) is a fillet joint (39).

6. Multi-part steering column tube as claimed in claim 1, **characterised in that** the wall thickness (28,29) of the top part (3) or bottom part (4) is thicker than a wall thickness (29,28) of the bottom part (4) or top part (3).

7. Multi-part steering column tube as claimed in claim 1 or 6, **characterised in that** internal faces (41) of the top part (3) and the bottom part (4) are arranged in alignment,

8. Multi-part steering column tube as claimed in claim 1 or 6, **characterised in that** external faces (40) of the top part (3) and bottom part (4) are disposed in alignment with one another.

9. Multi-part steering column tube as claimed in claim 1, **characterised in that** the top part (3) and/or bottom part (4) is/are made from a planar cut piece by folding.

10. Multi-part steering column tube as claimed in of claims 6 to 8, **characterised in that** an external dimension (33) of the top part (3) and an external dimension (44) of the bottom part (4) are different in the region of end the faces (24, 25) directed towards one another.

11. Multi-part steering column tube as claimed in one of claims 6 to 8, **characterised in that** an external dimension (33) of the top part (3) and an external dimension (44) of the bottom part (4) are of identical dimensions in the region of the end faces (24, 25) directed towards one another.

12. Multi-part steering column tube as claimed in claim 10 or 11, **characterised in that** a difference between the external dimensions (33, 44) of the top part (3) and bottom part (4) is greater than half of the wall thickness (28, 29).

13. Multi-part steering column tube as claimed in claim 1, **characterised in that** the top part (3) and/or bottom part (4) are provided with strip-shaped end parts (38) in the region of the side legs (34) offset in the direction of an axis of symmetry (27).

14. Multi-part steering column tube as claimed in claim 13, **characterised in that** an external dimension (33) of the top part (3) between the end parts (38) is bigger than a width dimension (32) at the base (21).

15. Multi-part steering column tube as claimed in claim 13 or 14, **characterised in that** the strip-shaped end parts (38) are connected to intermediate parts (36) by means of leg parts extending at least at an angle with respect to and/or parallel with the axis of symmetry (27).

16. Multi-part steering column tube as claimed in claim 1, **characterised in that** a height (22, 23) of the top or bottom part (3, 4) is taller than the height (23, 22) of the bottom or top part (3, 4).

17. Multi-part steering column tube as claimed in claim 1, **characterised in that** an elongate cutout (2) is provided in a base (21) of the top part (3) and/or in a base (69) of the bottom part (4), extending in the longitudinal direction thereof, for accommodating and guiding an adjusting mechanism.

18. Multi-part steering column tube as claimed in claim 1 or 17, **characterised in that** a reinforcing strip (20) is disposed between the two side legs (34, 43) on the base (21, 69) and is preferably joined to the base (21, 69).

19. Multi-part steering column tube as claimed in claim 18, **characterised in that** a cut-out (50) is provided in the reinforcing strip (20), which has a length (52) and width (51) identical to or bigger than the cut-out (2) in the base (21, 69) of the top part (3) and/or bottom part (4).

20. Multi-part steering column tube as claimed in claim 1, **characterised in that** the joining element between the bearing receiving points (7, 8) on the steering column tube (1) and the top part (3) and/or bottom part (4) is provided in the form of at least one welded joint, preferably at least a laser or plasma welded joint.

21. Multi-part steering column tube as claimed in claim 1, **characterised in that** the joining element between the bearing receiving points (7, 8) on the steering column tube (1) and the top part (3) and/or bottom part (4) is preferably provided in the form of at least one layer of adhesive.

22. Multi-part steering column tube as claimed in claim 1, **characterised in that** the joining element between the bearing receiving points (7, 8) on the steering column tube (1) and the top part (3) and/or the bottom part (4) is a soldered joint.

23. Multi-part steering column tube as claimed in claim 18 or 19, **characterised in that** the reinforcing strip (20) is joined to one of the parts (3, 4) by means of a soldered joint, in particular is welded through from outside.

24. Multi-part steering column as claimed in claim 18 or 19, **characterised in that** the reinforcing strip (20) is joined to one of the parts (3, 4) by means of a soldered joint.

25. Multi-part steering column tube (125) with a first part (127) and another part (128), of which at least one part (127, 128) has a multi-cornered; in particular U-shaped, cross section in a plane extending perpendicular to its longitudinal extension, and receiving regions (133, 134; 176; 225) for bearing elements (166, 167) are provided on the oppositely lying, mutually remote end regions (131, 132) of the first and/or other part (127, 128), **characterised in that** the parts (127, 128) are respectively of a half-shell design and are joined to one another by means of at least one joining element (185) in a joining region (126) lying in a plane parallel with the perpendicular longitudinal mid-plane, and the receiving regions (133; 134; 176; 225) for the bearing elements (166, 167) are formed by substantially shell-shaped bearing parts (137) integrally formed on the parts (127, 128).

26. Multi-part steering column tube as claimed in claim 25, **characterised in that** the parts (127, 128) are of a symmetrical design and the plane of the joining region (126) extends congruently with the longitudinal mid-plane of the steering column tube (125).

27. Multi-part steering column tube as claimed in claim 25, **characterised in that** the receiving region (225) is made up of several diametrically opposed arcuate receiving segments (228) with receiving compartments (226) for receiving at least certain regions of projections (227) of a bearing element (166, 167).

28. Multi-part steering column tube as claimed in claim 27, **characterised in that** each of the parts (127, 128) has several mutually spaced receiving segments (228).

29. Multi-part steering column tube as claimed in claim 25, **characterised in that** the receiving regions (176) are provided in the form of receiving segments (180) extending concentrically around the longitudinal mid-axis (16) of a steering shaft (15) and separated from one another by diametrically opposed slits (179).

30. Multi-part steering column tube as claimed in claim 25, **characterised in that** an internal face or external face or end face (5, 6) on oppositely lying end regions (131, 132) on the steering column tube (125) is provided as a receiving region (133, 134; 176) for the bearing elements (166, 167).

31. Multi-part steering column tube as claimed in claim 25, **characterised in that** the joining element between the two parts (127, 128) is provided by at least one welded joint, preferably at least a laser or plasma welded joint.

32. Multi-part steering column tube as claimed in claim 25, **characterised in that** a frame-type support arm (143) is disposed on the steering column tube (125) to provide a pivotable mounting on a bodywork.

33. Multi-part steering column tube as claimed in claim 32, **characterised in that** the support arm (143) is integrally formed on the first and/or other part (127, 128) or is connected to the first and/or other part (127, 128) by means of a joining element (152).

## Revendications

1. Tube de protection en plusieurs parties (1) avec une partie supérieure (3) et une partie inférieure (4), dont la partie supérieure (3) présente, dans un plan perpendiculaire à son extension longitudinale, une section transversale à peu près en forme de U ou de trapèze avec deux montants latéraux en saillie (34; 67), les montants latéraux (34; 67) formant chacun une face frontale (24) et la partie inférieure (4) étant posée sur les faces frontales (24) et étant reliée à la partie supérieure (3) par au moins un élément de liaison, et des logements de paliers (7, 8), qui sont formés par une bague fermée sans joint, étant disposés sur les deux faces frontales opposées détournées l'une de l'autre (5, 6) de la partie supérieure et/ou inférieure (3, 4), **caractérisé en ce que** la partie inférieure (4) présente elle aussi, dans un plan perpendiculaire à l'extension longitudinale du tube de protection (1), une section transversale à peu près en forme de U ou de trapèze avec deux montants latéraux en saillie (43; 70) avec chacun une face frontale (25), la partie supérieure et inférieure (3, 4) étant reliées l'une à l'autre sur les faces frontales (24, 25) par le au moins un élément de liaison et **en ce que** les logements de paliers (7, 8) sont reliés aux faces frontales (5, 6) du tube de protection (1) en intercalant une plaque d'appui dans laquelle ils sont logés.

2. Tube de protection en plusieurs parties selon la revendication 1, **caractérisé en ce que** l'élément de liaison entre les deux parties (3, 4) est formé par au moins un cordon de soudure, de préférence par au moins un cordon de soudure au laser ou au plasma.

3. Tube de protection en plusieurs parties selon la revendication 1, **caractérisé en ce que** l'élément de liaison entre les deux parties (3, 4) est formé par une couche d'adhésif.

4. Tube de protection en plusieurs parties selon la revendication 1, **caractérisé en ce que** l'élément de liaison entre les deux parties (3, 4) est formé par une jonction par brasage.

5. Tube de protection en plusieurs parties selon la revendication 2, **caractérisé en ce que** le cordon de soudure entre la partie supérieure (3) et la partie inférieure (4) est formé par une soudure (39) en congé.

6. Tube de protection en plusieurs parties selon la revendication 1, **caractérisé en ce que** l'épaisseur de paroi (28, 29) de la partie supérieure (3) ou la partie inférieure (4) est supérieure à une épaisseur de paroi (29, 28) de la partie inférieure (4) ou la partie supérieure (3).

7. Tube de protection en plusieurs parties selon la revendication 1 ou 6, **caractérisé en ce que** les côtés intérieurs (41) de la partie supérieure (3) et la partie inférieure (4) sont alignés.

8. Tube de protection en plusieurs parties selon la revendication 1 ou 6, **caractérisé en ce que** les côtés extérieurs (40) de la partie supérieure (3) et la partie inférieure (4) sont alignés les uns sur les autres.

9. Tube de protection en plusieurs parties selon la revendication 1, **caractérisé en ce que** la partie supérieure (3) et/ou la partie inférieure (4) est/sont fabriquée(s) en repliant une pièce découpée à surface plane.

10. Tube de protection en plusieurs parties selon l'une quelconque des revendications 6 à 8, **caractérisé en ce qu'**une dimension extérieure (33) de la partie supérieure (3) et une dimension extérieure (44) de la partie inférieure (4) sont différentes dans la zone des faces frontales tournées l'une vers l'autre (24, 25).

11. Tube de protection en plusieurs parties selon l'une quelconque des revendications 6 à 8, **caractérisé en ce qu'**une dimension extérieure (33) de la partie supérieure (3) et une dimension extérieure (44) de la partie inférieure (4) sont identiques dans la zone des faces frontales tournées l'une vers l'autre (24, 25)

12. Tube de protection en plusieurs parties selon la revendication 10 ou 11, **caractérisé en ce qu'**une différence entre les dimensions extérieures (33, 44) de la partie supérieure (3) et de la partie inférieure (4) est supérieure à la moitié de l'épaisseur de paroi (28, 29).

13. Tube de protection en plusieurs parties selon la revendication 1, **caractérisé en ce que**, dans la zone des montants latéraux (34), la partie supérieure (3) et/ou la partie inférieure (4) est/sont munie(s) de pièces d'extrémités (38) en forme de bande décalées dans la direction d'un axe de symétrie (27).

14. Tube de protection en plusieurs parties selon la revendication 13, **caractérisé en ce qu'**une dimension extérieure (33) de la partie supérieure (3) entre les pièces d'extrémités (38) est supérieure à une largeur (32) à la base (21).

15. Tube de protection en plusieurs parties selon la revendication 13 ou 14, **caractérisé en ce que** les pièces d'extrémités (38) en forme de bande sont reliées à des pièces intermédiaires (36) par des parties de montants s'étendant au moins en biais et/ou parallèlement à l'axe de symétrie (27).

16. Tube de protection en plusieurs parties selon la revendication 1, **caractérisé en ce qu'**une hauteur (22, 23) de la partie supérieure ou inférieure (3, 4) est supérieure à la hauteur (23, 22) de la partie inférieure ou supérieure (3, 4).

17. Tube de protection en plusieurs parties selon la revendication 1, **caractérisé en ce qu'**un creux (2) en forme de trou oblong est placé dans une base (21) de la partie supérieure (3) et/ou dans une base (69) de la partie inférieure (4) et s'étend dans la direction longitudinale de celles-ci pour recevoir et guider un dispositif de réglage.

18. Tube de protection en plusieurs parties selon la revendication 1 ou 17, **caractérisé en ce qu'**une nervure de renforcement (20) est disposée entre les deux montants latéraux (34, 43) dans la base (21, 69), de préférence reliée à la base (21, 69).

19. Tube de protection en plusieurs parties selon la revendication 18, **caractérisé en ce qu'**un creux (50) est disposé dans la nervure de renforcement (20), lequel creux présente une longueur (52) et une largeur (51) identiques ou supérieures au creux (2) dans la base (21, 69) de la partie supérieure (3) et/ou inférieure (4).

20. Tube de protection en plusieurs parties selon la revendication 1, **caractérisé en ce que** l'élément de liaison entre les logements de paliers (7, 8) dans le tube de protection (1) ou la partie supérieure (3) et/ou la partie inférieure (4) est formé par au moins un cordon de soudure, de préférence par au moins un cordon de soudure au laser ou au plasma.

21. Tube de protection en plusieurs parties selon la revendication 1, **caractérisé en ce que** l'élément de liaison entre les logements de paliers (7, 8) dans le tube de protection (1) ou la partie supérieure (3) et/ou la partie inférieure (4) est formé, de préférence, par au moins une couche d'adhésif.

22. Tube de protection en plusieurs parties selon la revendication 1, **caractérisé en ce que** l'élément de liaison entre les logements de paliers (7, 8) dans le tube de protection (1) ou la partie supérieure (3) et/ou la partie inférieure (4) est formé, de préférence, par au moins une jonction par brasage.

23. Tube de protection en plusieurs parties selon la revendication 18 ou 19, **caractérisé en ce que** la nervure de renforcement (20) est reliée à l'une des parties (3, 4) par un cordon de soudure, en particulier soudée à coeur de l'extérieur.

24. Tube de protection en plusieurs parties selon la revendication 18 ou 19, **caractérisé en ce que** la nervure de renforcement (20) est reliée à l'une des parties (3, 4) par une jonction par brasage.

25. Tube de protection en plusieurs parties (125) avec une première partie (127) et une autre partie (128), dont au moins une partie (127, 128) présente, dans un plan perpendiculaire à son extension longitudinale, une section transversale polygonale, en particulier en forme de U, des zones de logement (133, 134; 176; 225) pour des éléments de paliers (166, 167) étant disposés dans les deux zones d'extrémité (131, 132) opposées détournées l'une de l'autre de la première partie et/ou de l'autre partie (127, 128), **caractérisé en ce que** les parties (127, 128) on chacune une forme de demi-coque et sont reliées l'une à l'autre dans une zone de jonction (126) placée dans un plan parallèle au plan médian longitudinal perpendiculaire par au moins un élément de liaison (185) et **en ce que** les zones de logement (133, 134; 176; 225) pour les éléments de paliers (166, 167) sont formées chacune par des parties de paliers (137) à peu près en forme de coque moulées en une seule pièce sur les parties (127, 128).

26. Tube de protection en plusieurs parties selon la revendication 25, **caractérisé en ce que** les parties (127, 128) sont symétriques et le plan de la zone de jonction (126) s'étend en coïncidence avec le plan médian longitudinal du tube de protection (125).

27. Tube de protection en plusieurs parties selon la revendication 25, **caractérisé en ce que** la zone de logement (225) est formée par plusieurs segments de logement (228) en forme d'arc de cercle diamétralement opposés avec des compartiments de logement (226) séparant ceux-ci les uns des autres pour loger au moins par segment les parties en saillie (227) d'un élément de palier (166, 167).

28. Tube de protection en plusieurs parties selon la revendication 27, **caractérisé en ce que** chacune des parties (127, 128) comprend plusieurs segments de logement (228) séparés les uns des autres.

29. Tube de protection en plusieurs parties selon la revendication 25, **caractérisé en ce que** les zones de logement (176) sont séparées les unes des autres par des segments de logement (180) en forme d'arc de cercle répartis concentriquement autour d'un axe médian longitudinal (16) d'un arbre de direction (15) et séparés les uns des autres par des fentes (179) diamétralement opposées.

30. Tube de protection en plusieurs parties selon la revendication 25, **caractérisé en ce qu'**il est prévu, dans les zones d'extrémité opposées (131, 132) du tube de protection (125), un côté intérieur ou un côté extérieur ou une face frontale (5, 6) comme zone de logement (133, 134; 176) pour les éléments de paliers (166, 167).

31. Tube de protection en plusieurs parties selon la revendication 25, **caractérisé en ce que** l'élément de liaison entre les deux parties (127, 128) est formé par au moins un cordon de soudure, de préférence par au moins un cordon de soudure au laser ou au plasma.

32. Tube de protection en plusieurs parties selon la revendication 25, **caractérisé en ce que** qu'un bras de support (143) en forme de châssis est disposé sur le tube de protection (125) pour la fixation pivotante sur une carrosserie.

33. Tube de protection en plusieurs parties selon la revendication 32, **caractérisé en ce que** le bras de support (143) est moulé en une seule pièces sur la première et/ou l'autre partie (127, 128) ou est relié à la première et/ou l'autre partie (127, 128) par un élément de liaison (152).
